# EUROPÄISCHE PATENTSCHRIFT

(11) **EP 3 224 294 B1**
(45) Veröffentlichungstag und Bekanntmachung des Hinweises auf die Patenterteilung: **26.09.2018**
(21) Anmeldenummer: 15798121.8
(22) Anmeldetag: 23.11.2015
(51) Int. Cl.: C08G 18/71, C08G 18/28, C08G 65/336, C08L 71/02, C08L 75/00

(54) **SILANGRUPPEN-HALTIGE ZUSAMMENSETZUNG MIT SCHNELLER AUSHÄRTUNG**
COMPOSITION CONTAINING SILANE GROUPS WITH FAST CURING
COMPOSITION CONTENANT DES GROUPES DE SILANES À DURCISSEMENT RAPIDE

(30) Priorität: 24.11.2014 EP 14194600
(43) Veröffentlichungstag der Anmeldung: 04.10.2017
(73) Patentinhaber: Sika Technology AG, 6340 Baar (CH)
(72) Erfinder: KRAMER, Andreas, 8006 Zürich (CH); BURCKHARDT, Urs, 8049 Zürich (CH)
(74) Vertreter: Sika Patent Attorneys
(86) Internationale Anmeldenummer: PCT/EP2015/077373
(87) Internationale Veröffentlichungsnummer: WO 2016/083309

(56) Entgegenhaltungen:
- DE-A1-102008 020 979

## Beschreibung

### Technisches Gebiet

Die Erfindung betrifft Silangruppen-haltige Polymere und ihre Verwendung in härtbaren Zusammensetzungen, welche insbesondere zum Verkleben, Abdichten oder Beschichten von Bau- und Industrieprodukten einsetzbar sind.

### Stand der Technik

Silangruppen-haltige Polymere, auch als "silanfunktionelle Polymere" oder "silanmodifizierte Polymere" (SMP) oder "silanterminierte Polymere" (STP) bezeichnet, werden seit einiger Zeit erfolgreich als Bindemittel in feuchtigkeitshärtenden Zusammensetzungen eingesetzt, die insbesondere als elastische Klebstoffe, Dichtstoffe oder Beschichtungen in der Bau- und Fertigungsindustrie Verwendung finden und eine isocyanatfreie Alternative zu den traditionellen Polyurethanen darstellen.
Silanfunktionelle Polymere können sehr einfach aus Polyurethan-Polymeren erhalten werden, indem deren Isocyanatgruppen mittels Amino- oder Hydroxysilanen zu Silangruppen umfunktionalisiert werden. Solche silanfunktionellen Polyurethane vernetzen relativ rasch und härten zu nichtklebrigen Materialien von guter Festigkeit und Dehnbarkeit aus. Mit ihrem hohen Gehalt an Wasserstoffbrücken-bildenden Urethan- und/oder Harnstoffgruppen sind sie aber relativ hochviskos und deshalb nicht immer einfach verarbeitbar.
Silanfunktionelle Polymere mit tieferer Viskosität, welche frei sind von Harnstoffgruppen und nur wenige oder gar keine Urethangruppen enthalten, sind ebenfalls bekannt und sind beispielsweise durch Umsetzung von Polyetherpolyolen mit Isocyanatosilanen oder durch Hydrosilylierung von allylfunktionellen Polyethern zugänglich. Solche silanfunktionelle Polymere sind aufgrund ihrer einfachen Verarbeitbarkeit beliebt und werden deshalb von vielen Herstellern kommerziell angeboten. Allerdings sind sie deutlich reaktionsträger, vernetzen somit langsam und bleiben lange klebrig. Für eine ausreichend rasche und vollständige Aushärtung sind oft grosse Mengen an hoch aktiven Katalysatoren notwendig. Ausserdem erreichen sie nach Aushärtung meist nicht die mechanische Qualität der über Amino- oder Hydroxysilane erhaltenen silanfunktionellen Polyurethan-Polymere.
Als hoch aktive Katalysatoren werden klassischerweise Organozinn-Verbindungen eingesetzt. Diese sind aber gesundheitsschädlich und umweltgefährdend, weshalb ihr Einsatz zunehmend unerwünscht ist. Als Alternative zu Organozinn-Verbindungen werden oft Organotitanate verwendet, welche aber im Vergleich zu Organozinn-Verbindungen eine geringere katalytische Aktivität aufweisen, weshalb sie entweder in sehr hoher Dosierung oder in Kombination mit starken Basen, insbesondere cyclische Amidine wie 1,8-Diazabicyclo-[5.4.0]undec-7-en (DBU), eingesetzt werden. DBU ist aber ebenfalls ein gesundheitsschädlicher und umweltgefährdender sowie geruchsintensiver Stoff, der zudem in Zusammensetzungen auf Basis von silanfunktionellen Polymeren nur beschränkt verträglich ist, so dass diese zu Separation, Ausschwitzen oder Substratverschmutzung neigen.
Es besteht somit ein Bedarf nach einem niedrigviskosen silanfunktionellen Polymer mit hoher Vernetzungsgeschwindigkeit.

DE102008020979 A1 offenbart eine Zubereitung enthaltend ein Urethan-Amidverknüpftes silanfunktionelles Polyurethan.

### Darstellung der Erfindung

Aufgabe der vorliegenden Erfindung ist es daher, ein silanfunktionelles Polymer zur Verfügung zu stellen, welches eine tiefe Viskosität aufweist und auch ohne den Einsatz EHS-kritischer Katalysatoren wie Organozinn-Verbindungen oder DBU schnell vernetzt und dabei zu einem nichtklebrigen Material von guter Festigkeit und Dehnbarkeit aushärtet.
Überraschenderweise wurde gefunden, dass eine Polymer-Zubereitung nach Anspruch 1 diese Aufgabe löst. Sie ist einfach herstellbar, gut lagerfähig, weist eine überraschend tiefe Viskosität auf und härtet mit Feuchtigkeit überraschend schnell zu einem elastischen Material mit guter Festigkeit, Dehnbarkeit und Wärmebeständigkeit aus, auch wenn als Katalysator nur ein Organotitanat ohne zusätzliche starke Base vorhanden ist.
Überraschend ist insbesondere die Tatsache, dass sich die hohe Reaktivität der Endgruppen der Formel (I) auf die gesamte Polymer-Zubereitung überträgt und daraus trotz der unterschiedlich reaktiven Silangruppen bei der Aushärtung ein Material mit guten mechanischen Eigenschaften erhalten wird.

Die Polymer-Zubereitung nach Anspruch 1 enthält ein Polymer mit mindestens einer Endgruppe der Formel (I) und mindestens einer weiteren Silan-Endgruppe. Das Polymer enthält also verschiedene Silan-Endgruppen im selben Molekül. Besonders überraschend ist dabei der Umstand, dass eine solche Polymer-Zubereitung deutlich niedrigerviskos ist als eine Mischung von zwei silanfunktionellen Polymeren, bei welchen eines der beiden Polymere nur Endgruppen der Formel (I) und das andere nur weitere Silan-Endgruppen aufweist, wenn in der Mischung dieselben Endgruppen im gleichen Verhältnis wie in der Polymer-Zubereitung vorhanden sind.
Ein weiterer Gegenstand der Erfindung ist eine Methode nach Anspruch 15.
Mit dieser Methode ist es möglich, schnell aushärtende aber relativ hochviskose, Endgruppen der Formel (I) aufweisende Polymere so zu modifizieren, dass sie eine deutlich niedrige Viskosität aufweisen, wobei die schnelle Aushärtung weitgehend erhalten bleibt.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Polymer-Zubereitung bestehend aus silanfunktionellen Polymeren, umfassend mindestens ein Polymer mit mindestens einer Endgruppe der Formel (I), 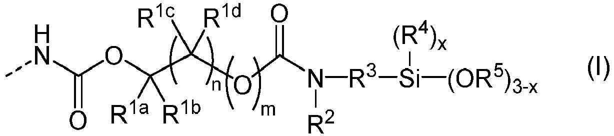 wobei
R^{1a}, R^{1b}, R^{1c} und R^{1d} unabhängig voneinander jeweils für ein Wasserstoffatom oder einen einwertigen Kohlenwasserstoffrest mit 1 bis 12 C-Atomen, oder paarweise jeweils für einen Alkylenrest mit 2 bis 6 C-Atomen stehen,
R² für ein Wasserstoffatom oder für einen einwertigen Kohlenwasserstoffrest mit 1 bis 12 C-Atomen, der gegebenenfalls Ethergruppen, Estergruppen, Nitrilgruppen, Aminogruppen oder Silangruppen enthält, steht,
R³ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, insbesondere Stickstoffatomen, steht,
R⁴ für einen Alkylrest mit 1 bis 8 C-Atomen steht,
R⁵ für einen Alkylrest mit 1 bis 10 C-Atomen, der gegebenenfalls Ethergruppen enthält, steht,
x für 0 oder 1 oder 2 steht,
m für 0 oder 1 steht, und
n für 0 oder 1 oder 2 oder 3 oder 4 oder 5 steht, wobei n für den Fall, dass
m für 1 steht, für 1 oder 2 oder 3 oder 4 steht;
und mindestens einer weiteren Silan-Endgruppe, welche nicht der Formel (I) entspricht.

Für den Fall, dass n für 2 oder 3 oder 4 oder 5 steht, können die Reste R^{1c} voneinander verschieden sein.
Für den Fall, dass n für 2 oder 3 oder 4 oder 5 steht, können die Reste R^{1d} voneinander verschieden sein.

Im vorliegenden Dokument bezeichnet der Begriff "Alkoxysilangruppe" oder kurz "Silangruppe" eine an einen organischen Rest gebundene Silylgruppe mit einem bis drei, insbesondere zwei oder drei, hydrolysierbaren Alkoxy-Resten am Silicium-Atom. Als "Methoxysilangruppe" wird eine Silangruppe bezeichnet, die als Alkoxy-Reste ausschliesslich Methoxy-Reste aufweist. Als "Ethoxysilangruppe" wird eine Silangruppe bezeichnet, die als Alkoxy-Reste ausschliesslich Ethoxy-Reste aufweist.
Der Begriff "Alkoxysilan" oder kurz "Silan" bezeichnet eine organische Verbindung, welche mindestens eine Silangruppe aufweist.
Der Begriff "Hydrosilan" bezeichnet ein Silan, welches anstelle eines organischen Restes ein Wasserstoffatom aufweist.

Als "Hydroxysilan", "Isocyanatosilan", "Aminosilan" bzw. "Mercaptosilan" werden Silane bezeichnet, die am organischen Rest zusätzlich zur Silangruppe eine oder mehrere Hydroxyl-, Isocyanato-, Amino- bzw. Mercaptogruppen aufweisen.
Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.
Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.
Mit dem Begriff "Viskosität" wird im vorliegenden Dokument die dynamische Viskosität oder Scherviskosität bezeichnet, welche durch das Verhältnis zwischen der Schubspannung und der Scherrate (Geschwindigkeitsgefälle) definiert ist und wie in den Ausführungsbeispielen beschrieben bestimmt wird. Eine gestrichelte Linie in den Formeln in diesem Dokument stellt jeweils die Bindung zwischen einem Substituenten und dem zugehörigen Molekülrest dar. Als "Raumtemperatur" wird eine Temperatur von 23 °C bezeichnet.

Die Polymer-Zubereitung besteht bevorzugt aus silanfunktionellen Polymeren, welche Silangruppen-haltigen Polyether und/oder Polyester und/oder Polycarbonate sind.

Besonders bevorzugt besteht sie aus aus silanfunktionellen Polymeren, welche Silangruppen-haltigen Polyether sind. Diese weisen mehrheitlich Oxyalkylen-Einheiten, insbesondere 1,2-Oxypropylen-Einheiten, auf.

In der Polymer-Zubereitung sind die Endgruppen der Formel (I) der silanfunktionellen Polymere bevorzugt mehrheitlich an cycloaliphatische oder aromatische Reste gebunden, insbesondere an cycloaliphatische Reste abgeleitet von Isophorodiisocyanat. Die weiteren Silan-Endgruppen sind bevorzugt ohne weitere Reste direkt an einen Polyether- oder Polyester- oder Polycarbonat-Rest gebunden.
Mit an cycloaliphatische Reste gebundenen Endgruppen der Formel (I) sind die silanfunktionellen Polymere besonders lichtstabil.
Mit direkt an einen Polyether- oder Polyester- oder Polycarbonat-Rest gebundenen weiteren Silan-Endgruppen sind die silanfunktionellen Polymere besonders niedrigviskos.

Die Polymer-Zubereitung ist bevorzugt frei von Isocyanatgruppen.

Die silanfunktionellen Polymere in der Polymer-Zubereitung weisen im Mittel bevorzugt 1.3 bis 4, insbesondere 1.5 bis 3, besonders bevorzugt 1.7 bis 2.8, Silangruppen pro Molekül auf.

Bevorzugt weisen die silanfunktionellen Polymere in der Polymer-Zubereitung insgesamt ein mittleres Molekulargewicht im Bereich von 1'000 bis 30'000 g/mol, bevorzugt 2'000 bis 25'000 g/mol, besonders bevorzugt 3'000 bis 20'000 g/mol, auf. Dies ermöglicht eine vorteilhafte Kombination aus tiefer Viskosität und guten mechanischen Eigenschaften.

Die Polymer-Zubereitung umfasst mindestens ein Polymer mit mindestens einer Endgruppe der Formel (I). 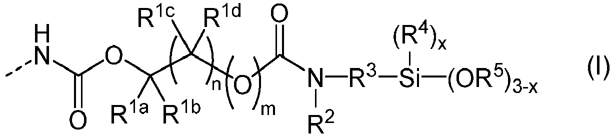 Für den Fall, dass m für 0 steht, steht n bevorzugt für 0 oder für 2.
Für den Fall, dass m für 1 steht, steht n bevorzugt für 1.
Bevorzugt steht m für 0.
R^{1a} steht bevorzugt für ein Wasserstoffatom oder für einen Methyl-Rest oder für einen n-Butyl-Rest, insbesondere für einen Methyl-Rest.
R^{1b} steht bevorzugt für ein Wasserstoffatom oder einen Methyl-Rest, insbesondere für ein Wasserstoffatom.
R^{1c} steht bevorzugt für ein Wasserstoffatom oder einen Methyl-Rest, insbesondere für ein Wasserstoffatom.
R^{1d} steht bevorzugt für ein Wasserstoffatom oder einen Methyl-Rest, insbesondere für ein Wasserstoffatom.
R² steht bevorzugt für ein Wasserstoffatom.
R³ steht bevorzugt für einen linearen oder verzweigten Alkylen-Rest mit 1 bis 6 C-Atomen.
Besonders bevorzugt ist der Rest R³ ausgewählt aus der Gruppe bestehend aus Methylen, 1,3-Propylen, 2-Methyl-1,3-propylen, 1,4-Butylen, 3-Methyl-1,4-butylen und 3,3-Dimethyl-1,4-butylen. Davon besonders bevorzugt sind 1,3-Propylen oder 3,3-Dimethyl-1,4-butylen, insbesondere 1,3-Propylen.
Die Stellung der Substituenten in den Resten R³ ist ausgehend vom Silicium-atom nummeriert.
R⁴ steht bevorzugt für einen Methyl-Rest.
R⁵ steht bevorzugt für einen Methyl-Rest oder für einen Ethyl-Rest.
x steht bevorzugt für 0 oder 1, insbesondere für 0. Solche Endgruppen sind besonders reaktiv.

Besonders bevorzugt sind Endgruppen der Formel (I), bei welchen m für 0, n für 0, R^{1a} für einen Methyl-Rest und R^{1b} für ein Wasserstoffatom stehen. Solche Endgruppen sind besonders reaktiv, besonders einfach und besonders rein herstellbar und ganz besonders lagerstabil.

Besonders bevorzugt sind weiterhin Endgruppen der Formel (I), bei welchen m für 0, n für 2, R^{1a} für einen Methyl-Rest oder für einen n-Butyl-Rest, insbesondere für einen Methyl-Rest, und R^{1b}, R^{1c} und R^{1d} jeweils für ein Wasserstoffatom stehen. Solche Endgruppen sind besonders reaktiv, besonders einfach und recht rein herstellbar und besonders lagerstabil.

Bevorzugt sind weiterhin Endgruppen der Formel (I), bei welchen m für 1, n für 1, R^{1a} für einen Methyl-Rest und R^{1b}, R^{1c} und R^{1d} jeweils für ein Wasserstoffatom stehen. Solche Endgruppen sind besonders einfach herstellbar. Ein Polymer mit solchen Endgruppen der Formel (I) enthält typischerweise auch einen erheblichen Anteil an Endgruppen der Formel (I), bei welchen m für 1, n für 1, R^{1c} für einen Methyl-Rest und R^{1a}, R^{1b} und R^{1d} jeweils für ein Wasserstoffatom stehen.

Die Polymer-Zubereitung umfasst mindestens ein Polymer mit mindestens einer weiteren Silan-Endgruppe, welche nicht der Formel (I) entspricht.

Bevorzugt ist die weitere Silan-Endgruppe eine Endgruppe der Formel (II), 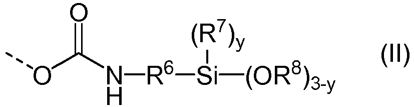 wobei
R⁶ für einen linearen oder verzweigten Alkylen- oder Cycloalkylenrest mit 1 bis 20 C-Atomen, gegebenenfalls mit aromatischen Anteilen, steht,
R⁷ für einen Alkylrest mit 1 bis 8 C-Atomen steht,
R⁸ für einen Alkylrest mit 1 bis 10 C-Atomen, der gegebenenfalls Ethergruppen enthält, steht, und
y für 0 oder 1 oder 2 steht.
Endgruppen der Formel (II) sind aus handelsüblichen Ausgangsverbindungen erhältlich und ermöglichen silanfunktionelle Polymere mit tiefer Viskosität.

R⁶ steht bevorzugt für einen linearen oder verzweigten Alkylen-Rest mit 1 bis 6 C-Atomen, besonders bevorzugt für Methylen oder für 1,3-Propylen, insbesondere für 1,3-Propylen.
R⁷ steht bevorzugt für einen Methyl-Rest.
R⁸ steht bevorzugt für einen Methyl-Rest oder für einen Ethyl-Rest.
y steht bevorzugt für 0 oder 1, insbesondere für 0. Solche Endgruppen sind besonders reaktiv.
Endgruppen der Formel (II) sind besonders einfach herstellbar und ermöglichen eine tiefe Viskosität der Polymer-Zubereitung.

Weiterhin bevorzugt ist die weitere Silan-Endgruppe eine Endgruppe der Formel (III), 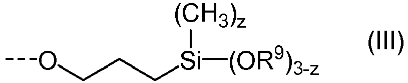 wobei
R⁹ für einen Methyl-Rest oder einen Ethyl-Rest steht und
z für 0 oder 1 oder 2 steht.
Bevorzugt steht z für 0 oder 1, insbesondere für 1.
Bevorzugt steht R⁹ für einen Methyl-Rest.
Endgruppen der Formel (III) ermöglichen eine besonders tiefe Viskosität der Polymer-Zubereitung.

Bei den Endgruppen der Formel (II) und bei den Endgruppen der Formel (III) ist das Sauerstoffatom, über das die jeweilige Endgruppe ans Polymer gebunden ist, bevorzugt direkt, d.h. ohne ein weiteres Bindeglied, an einen Polyether- oder Polyester- oder Polycarbonat-Rest, insbesondere einen Polyether-Rest, gebunden. Ein Polymer mit solchen Endgruppen der Formel (II) oder (III) ist besonders niedrigviskos.

Im Fall von Endgruppen der Formel (II) stehen R⁵ und R⁸ bevorzugt für gleiche Reste, insbesondere für Methyl- oder für Ethyl-Reste.
Im Fall von Endgruppen der Formel (III) stehen R⁵ und R⁹ bevorzugt für gleiche Reste, insbesondere für Methyl-Reste.

Dadurch wird bei der Aushärtung des Polymers nur eine Art von Alkohol freigesetzt. Bei Polymeren mit Silangruppen mit unterschiedlichen Alkoxy-Resten besteht während der Lagerung die Möglichkeit, dass die Silangruppen durch Umesterung Alkoxy-Reste untereinander austauschen, wodurch sich die Aushärtungsgeschwindigkeit des Polymers wesentlich verändern kann, was meist unerwünscht ist.

Bevorzugt enthält die Polymer-Zubereitung entweder ausschliesslich silanfunktionelle Polymere mit Methoxysilangruppen oder ausschliesslich silanfunktionelle Polymere Ethoxysilangruppen.
Dabei weisen silanfunktionelle Polymere mit ausschliesslich Methoxysilangruppen den Vorteil auf, mit Feuchtigkeit besonders schnell zu vernetzen. Silanfunktionelle Polymere mit ausschliesslich Ethoxysilangruppen weisen den Vorteil auf, besonders lagerstabil zu sein und bei der Aushärtung das wenig toxische Ethanol freizusetzen.

Die silanfunktionellen Polymere in der Polymer-Zubereitung weisen insgesamt bevorzugt ein Verhältnis zwischen der Anzahl Endgruppen der Formel (I) und der Anzahl weiterer Silan-Endgruppen, insbesondere Endgruppen der Formel (II) oder der Formel (III), im Bereich von 99/1 bis 5/95, besonders bevorzugt im Bereich von 97/3 bis 20/80, insbesondere im Bereich von 95/5 bis 50/50, auf. Eine solche Polymer-Zubereitung weist eine vorteilhafte Kombination von tiefer Viskosität und schneller Aushärtung auf.

Es ist auch möglich, dass in der Polymer-Zubereitung neben Polymeren mit Endgruppen der Formel (I) zusätzlich sowohl Polymere mit Endgruppen der Formel (II) als auch Polymere Endgruppen der Formel (III) vorhanden sind.

Ein weiterer Gegenstand der Erfindung ist ein Verfahren zur Herstellung einer Polymer-Zubereitung wie vorgängig beschrieben, umfassend die Schritte
- Bereitstellen eines Polymers enthaltend mindestens eine Hydroxylgruppe und mindestens eine Silan-Endgruppe, welche nicht der Formel (I) entspricht, als erstes Zwischenprodukt;
- Umsetzen des ersten Zwischenprodukts mit mindestens einem Diisocyanat bei einem NCO/OH-Verhältnis von über 1 zu einem zweiten Zwischenprodukt; und
- Umsetzen des zweiten Zwischenprodukts mit mindestens einem Hydroxysilan der Formel (VI) bei einem NCO/OH-Verhältnis von höchstens 1. 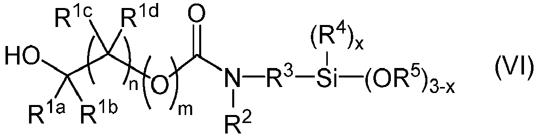 In den Formeln (IV), (V) und (VI) weisen m, n, x, y, z, R^{1a}, R^{1b}, R^{1c}, R^{1d}, R², R³, R⁴, R⁵, R⁶, R⁷, R⁸ und R⁹ die bereits genannten Bedeutungen auf.

Das Verfahren wird bevorzugt unter Feuchtigkeitsausschluss bei einer Temperatur von 20 °C bis 120 °C, insbesondere 50 °C bis 100 °C, durchgeführt, gegebenenfalls in Anwesenheit geeigneter Katalysatoren. Bevorzugt wird mindestens ein für die OH-NCO-Reaktion aktiver Katalysator eingesetzt, insbesondere eine Bismut(III)-Verbindung oder eine Zink(II)-Verbindung.

Bevorzugt wird das erste Zwischenprodukt hergestellt durch Umsetzen
- mindestens eines Polyols mit mindestens einem Isocyanatosilan der Formel (IV) bei einem NCO/OH-Verhältnis von unter 1 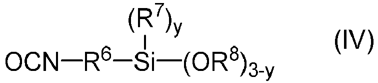 oder
- mindestens eines Allylgruppen aufweisenden Polyols mit mindestens einem Hydrosilan der Formel (V) unter Hydrosilylierung der Allylgruppen.

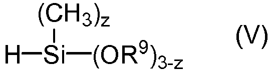

Bei der Umsetzung eines Polyols mit einem Isocyanatosilan der Formel (IV) zum ersten Zwischenprodukt entstehen insbesondere Endgruppen der Formel (II). Für diese Umsetzung liegt das NCO/OH-Verhältnis bevorzugt im Bereich von 0.01 bis 0.95, insbesondere 0.03 bis 0.80, besonders bevorzugt 0.05 bis 0.50. Bevorzugt wird das Isocyanatosilan dabei vollständig umgesetzt, so dass das erste Zwischenprodukt vor der Weiterführung des Verfahrens frei von Isocyanatgruppen ist.

Bei der Umsetzung eines Allylgruppen aufweisenden Polyols mit einem Hydrosilan der Formel (V) zum ersten Zwischenprodukt entstehen insbesondere Endgruppen der Formel (III). Dabei kann mindestens ein weiteres Polyol vorhanden sein, welches keine Allylgruppen aufweist, und/oder dem Produkt kann vor der weiteren Durchführung des Verfahrens ein weiteres Polyol, welches keine Allylgruppen aufweist, zugesetzt werden. Bevorzugt ist das erste Zwischenprodukt frei von Allylgruppen und weist ein Verhältnis zwischen OH-Gruppen und Endgruppen der Formel (III) im Bereich von 0.01 bis 0.95, insbesondere 0.03 bis 0.80, besonders bevorzugt 0.05 bis 0.50, auf.

Bei der Umsetzung des ersten Zwischenprodukts mit einem Diisocyanat zum zweiten Zwischenprodukt liegt das NCO/OH-Verhältnis bevorzugt im Bereich von 1.2 bis 5, insbesondere 1.4 bis 4, besonders bevorzugt 1.6 bis 3. Bevorzugt werden die vorhandenen Hydroxylgruppen dabei vollständig umgesetzt, so dass das zweite Zwischenprodukt frei von Hydroxylgruppen ist. Durch die Wahl eines Verhältnisses von unter 2 wird gezielt eine Kettenverlängerung des Polymers herbeigeführt.

Bei der Umsetzung des zweiten Zwischenprodukts mit einem Hydroxysilan der Formel (VI) liegt das NCO/OH-Verhältnis bevorzugt im Bereich von 0.5 bis 1, insbesondere 0.8 bis 1. Bevorzugt werden die Isocyanatgruppen dabei vollständig umgesetzt, so dass das erhaltene silanfunktionelle Polymer schliesslich frei von Isocyanatgruppen ist.

Die Polymer-Zubereitung aus dem beschriebenen Verfahren umfasst mindestens ein Polymer mit mindestens einer Endgruppe der Formel (I) und mindestens einer weiteren Silan-Endgruppe. Zusätzlich umfasst sie typischerweise mindestens ein weiteres Polymer mit mindestens zwei Endgruppen der Formel (I) und mindestens ein weiteres Polymer mit mindestens zwei weiteren Silan-Endgruppen. Dabei sind die weiteren Silan-Endgruppen bevorzugt ausgewählt aus Endgruppen der Formel (II) und Endgruppen der Formel (III).

Es ist möglich, im beschriebenen Verfahren die Schritte zur Einführung von Endgruppen der Formel (II) und zur Einführung von Endgruppen der Formel (III) auf geeignete Weise zu kombinieren, wodurch ein silanfunktionelles Polymer erhalten wird, welches neben Endgruppen der Formel (I) zusätzlich sowohl Endgruppen der Formel (II) als auch Endgruppen der Formel (III) enthält.

Bevorzugte Polyole für das beschriebene Verfahren sind
- Polyetherpolyole, insbesondere Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder mehreren aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen. Ebenfalls geeignet sind Polyetherpolyole mit darin dispergierten Polymerpartikeln, insbesondere solche mit Styrol-Acrylnitril-Partikeln (SAN) oder Acrylnitril-Methylmethacrylat-Partikeln.
- Polyesterpolyole, insbesondere aus der Polykondensation von Hydroxycarbonsäuren oder insbesondere solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin oder 1,1,1-Trimethylolpropan, oder Mischungen der vorgenannten Alkohole, mit organischen Di- oder Tricarbonsäuren, insbesondere Dicarbonsäuren, oder deren Anhydride oder Ester, wie insbesondere Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure oder Trimellithsäureanhydrid, oder Mischungen der vorgenannten Säuren, sowie Polyesterpolyole aus Lactonen wie insbesondere ε-Caprolacton und Startern wie den vorgenannten zwei- oder dreiwertigen Alkoholen. Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.

Besonders bevorzugte Polyole für das beschriebene Verfahren sind Polyetherpolyole, insbesondere Polyoxypropylendiole und/oder Polyoxypropylentriole, oder sogenannte Ethylenoxid-terminierte (EO-endcapped) Polyoxypropylendiole oder -triole. Letztere sind Polyoxyethylen-polyoxypropylen-Mischpolyole, die insbesondere dadurch erhalten werden, dass Polyoxypropylendiole oder Polyoxypropylentriole nach Abschluss der Polypropoxylierungsreaktion mit Ethylenoxid weiter alkoxyliert werden und dadurch schliesslich primäre Hydroxylgruppen aufweisen.

Bevorzugte Polyetherpolyole weisen einen Ungesättigtheitsgrad von weniger als 0.02 mEq/g, insbesondere weniger als 0.01 mEq/g auf.
Bevorzugte Polyetherpolyole weisen ein mittleres Molekulargewicht im Bereich von 500 bis 30'000 g/mol, bevorzugt 1'000 bis 20'000 g/mol, insbesondere 2'000 bis 15'000 g/mol, auf.

Bevorzugte Allylgruppen aufweisende Polyole für das beschriebene Verfahren sind die vorgängig genannten Polyole, bei welchen ein Teil der Hydroxylgruppen zu Allylether-Endgruppen umgesetzt sind, beispielsweise mittels Allylchlorid. Bevorzugt enthält das Polyol lineare Polyoxyalkylene, welche im Mittel eine Hydroxyl-Endgruppe und eine Allylether-Endgruppe aufweisen.

Bevorzugte Diisocyanate für das beschriebene Verfahren sind ausgewählt aus der Gruppe bestehend aus 1,6-Hexamethylendiisocyanat (HDI), 1-Isocyanato-3,3,5-trimethyl-5-isocyanatomethyl-cyclohexan (=Isophorondiisocyanat oder IPDI), 2,4- und/oder 2,6-Toluylendiisocyanat und beliebige Gemische dieser Isomeren (TDI) und 4,4'-, 2,4'- und/oder 2,2'-Diphenylmethandiisocyanat und beliebige Gemische dieser Isomeren (MDI). Besonders bevorzugt sind IPDI oder TDI. Meist bevorzugt ist IPDI. Damit wird eine Polymer-Zubereitungen mit besonders guter Lichtechtheit erhalten.

Bevorzugte Isocyanatosilane der Formel (IV) für das beschriebene Verfahren sind Isocyanatomethyltrimethoxysilan, Isocyanatomethyldimethoxymethylsilan, Isocyanatomethyltriethoxysilan, Isocyanatomethyldiethoxymethylsilan, 3-Isocyanatopropyltrimethoxysilan, 3-Isocyanatopropyldimethoxymethylsilan, 3-Isocyanatopropyltriethoxysilan oder 3-Isocyanatopropyldiethoxymethylsilan. Besonders bevorzugt ist 3-Isocyanatopropyltrimethoxysilan oder 3-Isocyanatopropyltriethoxysilan.

Bevorzugte Hydrosilane der Formel (V) für das beschriebene Verfahren sind Trimethoxyhydrosilan, Dimethoxymethylhydrosilan, Triethoxyhydrosilan oder Diethoxymethylhydrosilan, insbesondere Dimethoxymethylhydrosilan.

Bevorzugte Hydroxysilane der Formel (VI) für das beschriebene Verfahren sind ausgewählt aus der Gruppe bestehend aus N-(3-Trimethoxysilylpropyl)-2-hydroxypropanamid, N-(3-Dimethoxymethylsilylpropyl)-2-hydroxypropanamid, N-(3-Triethoxysilylpropyl)-2-hydroxypropanamid, N-(4-Trimethoxysilylbutyl)-2-hydroxypropanamid, N-(4-Triethoxysilylbutyl)-2-hydroxypropanamid, N-(2-Methyl-4-trimethoxysilylbutyl)-2-hydroxypropanamid, N-(2-Methyl-4-triethoxysilylbutyl)-2-hydroxypropanamid, N-(2,2-Dimethyl-4-trimethoxysilylbutyl)-2-hydroxypropanamid, N-(2,2-Dimethyl-4-triethoxysilylbutyl)-2-hydroxypropanamid, N-(3-Triethoxysilylpropyl)-4-hydroxypentanamid und 2-Hydroxypropyl-N-(3-triethoxysilylpropyl)carbamat.
Davon bevorzugt ist N-(3-Trimethoxysilylpropyl)-2-hydroxypropanamid oder N-(3-Triethoxysilylpropyl)-2-hydroxypropanamid. Diese Hydroxysilane sind besonders einfach und besonders rein herstellbar und ermöglichen besonders hohe Reaktivitäten und besonders gute mechanische Eigenschaften.

Ein geeignetes Hydroxysilan der Formel (VI) für das beschriebene Verfahren wird bevorzugt erhalten durch die Umsetzung von mindestens einem Aminosilan der Formel (VII) 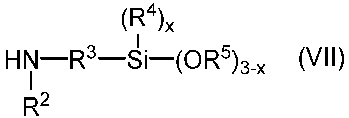 mit mindestens einem Lactid der Formel (VIII) oder mindestens einem Lacton oder Carbonat der Formel (IX).

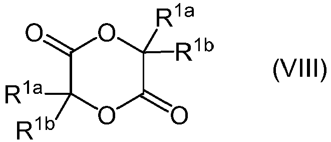

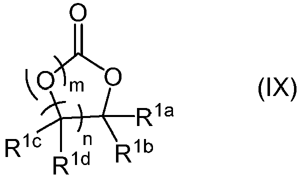

In den Formeln (VII), (VIII) und (IX) weisen m, n, x, R^{1a}, R^{1b}, R^{1c}, R^{1d}, R², R³, R⁴ und R⁵ die bereits genannten Bedeutungen auf.

Die Umsetzung von mindestens einem Aminosilan der Formel (VII) mit mindestens einem Lactid der Formel (VIII) wird bevorzugt unter Feuchtigkeitsausschluss bei einer Temperatur im Bereich von 15 bis 120 °C, insbesondere 20 bis 90 °C, durchgeführt, gegebenenfalls in Anwesenheit eines Katalysators und/oder eines Trocknungsmittels wie insbesondere Vinyltriethoxysilan, Tetraethoxysilan, Vinyltrimethoxysilan oder einem Molekularsieb. Es werden bevorzugt ungefähr zwei Mol Aminosilan pro Mol Lactid eingesetzt. Insbesondere wird mit einem Aminosilan/Lactid-Verhältnis im Bereich von 1.8 bis 2.2 gearbeitet. Die Umsetzung kann lösemittelfrei oder in einem geeigneten Lösemittel erfolgen. Nach der Umsetzung können allfällig vorhandene flüchtige Verbindungen, insbesondere Lösemittel, unreagierte Edukte oder freigesetzter Alkohol, destillativ aus dem Reaktionsprodukt entfernt werden.
Ein bevorzugtes Lactid der Formel (VIII) ist ein Lactid von Milchsäure.

Die Umsetzung von mindestens einem Aminosilan der Formel (VII) mit mindestens einem Lacton oder Carbonat der Formel (IX) wird bevorzugt unter Feuchtigkeitsausschluss bei einer Temperatur im Bereich von 50 °C bis 150 °C, insbesondere 60 °C bis 140 °C, durchgeführt, gegebenenfalls in Anwesenheit eines Katalysators, insbesondere einer Säure, bevorzugt einer Carbonsäure, und/oder eines Trocknungsmittels. Das Aminosilan der Formel (VII) wird bevorzugt ungefähr stöchiometrisch zum Lacton oder Carbonat der Formel (IX) eingesetzt. Insbesondere wird die Umsetzung mit einem Aminosilan/Lacton- bzw. Carbonat-Verhältnis im Bereich von 0.8 bis 1.1 durchgeführt. Die Umsetzung kann lösemittelfrei oder in einem geeigneten Lösemittel erfolgen. Nach der Umsetzung können allfällig vorhandene flüchtige Verbindungen, insbesondere Lösemittel, unreagierte Edukte oder freigesetzter Alkohol, destillativ aus dem Reaktionsprodukt entfernt werden.
Ein geeignetes Lacton oder Carbonat der Formel (IX) ist insbesondere γ-Valerolacton, γ-Hexalacton, γ-Heptalacton, γ-Octalacton, γ-Nonalacton, γ-Decalacton, γ-Undecalacton, γ-Dodecalacton oder 1,2-Propylencarbonat. Bevorzugt ist γ-Valerolacton, γ-Octalacton oder 1,2-Propylencarbonat, besonders bevorzugt ist γ-Valerolacton.

Die Herstellung der Polymer-Zubereitung kann in einem Lösemittel oder in einem Weichmacher erfolgen, wobei diese geeigneterweise keine gegenüber Hydroxyl- oder Isocyanatgruppen reaktive Gruppen enthalten.
Die Herstellung der Polymer-Zubereitung kann auch in einem weiteren silanfunktionellen Polymer erfolgen, insbesondere in einem silanfunktionellen Polymer, welches frei ist von Endgruppen der Formel (I).

Die Polymer-Zubereitung ist unter Ausschluss von Feuchtigkeit lagerstabil. Bei Kontakt mit Feuchtigkeit hydrolysieren die Silangruppen. Dabei bilden sich Silanolgruppen (Si-OH-Gruppen) und durch nachfolgende Kondensationsreaktionen Siloxangruppen (Si-O-Si-Gruppen). Als Ergebnis dieser Reaktionen härtet die Polymer-Zubereitung zu einem vernetzten Kunststoff aus. Das Wasser für die Aushärtung kann entweder aus der Luft stammen (Luftfeuchtigkeit), oder die Polymer-Zubereitung kann mit einer Wasser enthaltenden Komponente in Kontakt gebracht werden.
Die beschriebene Polymer-Zubereitung weist vorteilhafte Eigenschaften auf. Sie ist überraschend niedrigviskos, sehr lagerstabil und härtet mit Feuchtigkeit bei Raumtemperatur rasch zu einem elastischen, nichtklebrigen Material von guter Festigkeit und Dehnbarkeit aus.
Überraschenderweise ist sie deutlich niedrigviskoser als eine Abmischung von zwei silanfunktionellen Polymeren, bei welchen das eine Polymer nur Endgruppen der Formel (I) und das andere Polymer nur weitere Silan-Endgruppen, welche nicht der Formel (I) entsprechen, aufweist, wenn diese zwei Polymere in einem solchen Verhältnis abgemischt sind, dass in der Mischung das Verhältnis der unterschiedlichen Endgruppen ungefähr demjenigen der silanfunktionellen Polymere in der erfindungsgemässen Polymer-Zubereitung entspricht.

Bevorzugt weist die Polymer-Zubereitung eine Viskosität bei 20 °C im Bereich von 2 bis 200 Pa·s, besonders bevorzugt 3 bis 150 Pa·s, insbesondere 4 bis 100 Pa·s, am meisten bevorzugt 5 bis 75 Pa·s, auf.

Ein weiterer Gegenstand der vorliegenden Erfindung ist eine Zusammensetzung umfassend mindestens eine Polymer-Zubereitung wie vorgängig beschrieben.
Bevorzugt enthält die Zusammensetzung mindestens einen weiteren Bestandteil ausgewählt aus Füllstoffen, Vernetzern, Weichmachern, Lösemitteln, Katalysatoren, Haftvermittlern, Trocknungsmitteln, Stabilisatoren, Pigmenten und Rheologiehilfsmitteln.
Die Zusammensetzung kann insbesondere als elastischer Klebstoff oder Dichtstoff oder als elastische Beschichtung verwendet werden.

Bevorzugt weist die Zusammensetzung einen Gehalt an silanfunktionellen Polymeren im Bereich von 5 bis 95 Gewichts-%, insbesondere im Bereich von 20 bis 80 Gewichts-%, auf.
Besonders bevorzugt enthält die Zusammensetzung einen Gehalt im Bereich von 5 bis 95 Gewichts-%, insbesondere 20 bis 80 Gewichts-%, der beschriebenen Polymer-Zubereitung.
Es kann vorteilhaft sein, wenn die Zusammensetzung neben der beschriebenen Polymer-Zubereitung mindestens ein weiteres silanfunktionelles Polymer enthält. Für den Fall, dass ein solches weiteres silanfunktionelles Polymer eine geringere Reaktivität als die Polymer-Zubereitung aufweist, kann diese einen starken beschleunigenden Effekt auf die Zusammensetzung hervorrufen.
Als weiteres silanfunktionelles Polymer sind kommerziell erhältliche silanfunktionelle Polymere bevorzugt, insbesondere Produkte unter den Handelsnamen MS Polymer™ (von Kaneka Corp.; insbesondere die Typen S203H, S303H, S227, S810, MA903 oder S943); MS Polymer™ bzw. Silyl™ (von Kaneka Corp.; insbesondere die Typen SAT010, SAT030, SAT200, SAX350, SAX400, SAX725, MAX450, MAX602 oder MAX951); Excestar® (von Asahi Glass Co. Ltd.; insbesondere die Typen S2410, S2420, S3430 oder S3630); SPUR+* (von Momentive Performance Materials; insbesondere die Typen 1010LM, 1015LM oder 1050MM); Vorasil™ (von Dow Chemical Co.; insbesondere die Typen 602 oder 604); Desmoseal® (von Bayer MaterialScience AG; insbesondere die Typen S XP 2636, S XP 2749, S XP 2774 oder S XP 2821); TEGOPAC® (von Evonik Industries AG; insbesondere die Typen Seal 100, Bond 150 oder Bond 250); oder Geniosil® STP (von Wacker Chemie AG; insbesondere die Typen E15 oder E35).

Bevorzugt enthält die Zusammensetzung mindestens einen Katalysator, der die Vernetzung von silanfunktionellen Polymeren beschleunigt. Dafür geeignet sind insbesondere Metallkatalysatoren und/oder stickstoffhaltige Verbindungen.
Geeignete Metallkatalysatoren sind insbesondere Verbindungen von Titan, Zirkonium, Aluminium oder Zinn, insbesondere Organozinn-Verbindungen, Organotitanate, Organozirkonate oder Organoaluminate, wobei diese Verbindungen insbesondere Alkoxygruppen, Aminoalkoxygruppen, Sulfonatgruppen, Carboxylgruppen, 1,3-Diketonatgruppen, 1,3-Ketoesteratgruppen, Dialkylphosphatgruppen oder Dialkylpyrophosphatgruppen aufweisen.
Besonders geeignete Organozinn-Verbindungen sind Dialkylzinnoxide, Dialkylzinndichloride, Dialkylzinndicarboxylate und Dialkylzinndiketonate, insbesondere Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat oder Dioctylzinndiacetylacetonat, oder Alkylzinnthioester.
Besonders geeignete Organotitanate sind:
- Titan(IV)-Komplexverbindungen mit zwei 1,3-Diketonat-Liganden, insbesondere 2,4-Pentandionat (=Acetylacetonat), und zwei Alkoholat-Liganden;
- Titan(IV)-Komplexverbindungen mit zwei 1,3-Ketoesterat-Liganden, insbesondere Ethylacetoacetat, und zwei Alkoholat-Liganden;
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden;
- Titan(IV)-Komplexverbindungen mit vier Alkoholat-Liganden;
- sowie höherkondensierte Organotitanate, insbesondere oligomeres Titan(IV)-tetrabutanolat, auch als Polybutyltitanat bezeichnet;
wobei als Alkoholat-Liganden insbesondere Isobutoxy, n-Butoxy, Isopropoxy, Ethoxy oder 2-Ethylhexoxy geeignet sind.
Ganz besonders geeignet sind Bis(ethylacetoacetato)diisobutoxy-titan(IV), Bis-(ethylacetoacetato)diisopropoxy-titan(IV), Bis(acetylacetonato)diisopropoxy-titan(IV), Bis(acetylacetonato)diisobutoxy-titan(IV), Tris(oxyethyl)aminisopropoxy-titan(IV), Bis[tris(oxyethyl)amin]diisopropoxy-titan(IV), Bis(2-ethylhexan-1,3-dioxy)-titan(IV), Tris[2-((2-aminoethyl)annino)ethoxy]ethoxy-titan(IV), Bis(neopentyl(diallyl)oxy-diethoxy-titan(IV), Titan(IV)tetrabutanolat, Tetra(2-ethylhexyloxy)titanat, Tetra(isopropoxy)titanat oder Polybutyltitanat. Insbesondere geeignet sind die kommerziell erhältlichen Typen Tyzor® AA, GBA, GBO, AA-75, AA-65, AA-105, DC, BEAT, BTP, TE, TnBT, KTM, TOT, TPT oder IBAY (alle von Dorf Ketal); Tytan PBT, TET, X85, TAA, ET, S2, S4 oder S6 (alle von Borica Company Ltd.) und Ken-React® KR® TTS, 7, 9QS, 12, 26S, 33DS, 38S, 39DS, 44, 134S, 138S, 133DS, 158FS oder LICA® 44 (alle von Kenrich Petrochemicals).
Besonders geeignete Organozirkonate sind die kommerziell erhältlichen Typen Ken-React® NZ® 38J, KZ® TPPJ, KZ® TPP, NZ® 01, 09, 12 38, 44 oder 97 (alle von Kenrich Petrochemicals) oder Snapcure® 3020, 3030, 1020 (alle von Johnson Matthey & Brandenberger).
Ein besonders geeignetes Organoaluminat ist der kommerziell erhältliche Typ K-Kat 5218 (von King Industries).

Als Katalysator geeignete stickstoffhaltige Verbindungen sind insbesondere Amine wie insbesondere N-Ethyl-diisopropylamin, N,N,N',N'-Tetramethyl-alkylendiamine, Polyoxyalkylenamine, 1,4-Diazabicyclo[2.2.2]octan; Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin oder deren Analoga mit Ethoxy- oder Isopropoxyanstelle der Methoxygruppen am Silicium; cyclische Amidine wie insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Di-o-tolylguanidin, 2-tert-Butyl-1,1,3,3-tetramethylguanidin oder Umsetzungsprodukte aus Carbodiimiden und Aminen wie insbesondere Polyetheraminen oder Aminosilanen; oder Imidazole wie insbesondere N-(3-Trimethoxysilylpropyl)-4,5-dihydroimidazol oder N-(3-Triethoxysilylpropyl)-4,5-dihydroimidazol.
Geeignet sind auch Kombinationen verschiedener Katalysatoren, insbesondere Kombinationen aus mindestens einem Metallkatalysator und mindestens einer stickstoffhaltigen Verbindung.
Als Katalysator bevorzugt sind Organozinn-Verbindungen, Organotitanate, Amine, Amidine, Guanidine oder Imidazole.
Besonders bevorzugt sind Organotitanate oder Guanidine.

Geeignet sind weiterhin insbesondere die folgenden Hilfs- und Zusatzmittel:
- Anorganische und organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Gimmer, Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln.
- Haftvermittler und/oder Vernetzer, insbesondere Silane wie insbesondere Aminosilane, wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin oder deren Analoga mit Ethoxy- oder Isopropoxy- anstelle der Methoxygruppen am Silicium, N-Phenyl-, N-Cyclohexyl- oder N-Alkylaminosilane, weiterhin Mercaptosilane, Epoxysilane, (Meth)acrylosilane, Anhydridosilane, Carbamatosilane, Alkylsilane oder Iminosilane, oder oligomere Formen dieser Silane, oder Addukte aus primären Aminosilanen mit Epoxysilanen oder (Meth)acrylosilanen oder Anhydridsilanen. Insbesondere geeignet sind 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Ureidopropyltrimethoxysilan oder die entsprechenden Silane mit Ethoxysilangruppen anstelle der Methoxysilangruppen, oder oligomere Formen dieser Silane.
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate, Sebacate, Polyole, insbesondere Polyoxyalkylenpolyole oder Polyesterpolyole, Glykolether, Glykolester, organische Phosphor- oder Sulfonsäureester, Polybutene oder von natürlichen Fetten oder Ölen abgeleitete Fettsäuremethyl- oder -ethylester, auch "Biodiesel" genannt.
- Lösemittel.
- Trocknungsmittel, insbesondere Tetraethoxysilan, Vinyltrimethoxy- oder Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, oder Calciumoxid oder Molekularsiebe.
- Stabilisatoren gegen Oxidation, Wärme, Licht oder UV-Strahlung.
- Pigmente, insbesondere Titandioxid oder Eisenoxide.
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, pyrogene Kieselsäuren, Celluloseether oder hydrophob modifizierte Polyoxyethylene.
- Fasern, insbesondere Glasfasern, Kohlefasern, Metallfasern, Keramikfasern oder Kunststofffasern wie Polyamidfasern oder Polyethylenfasern.
- Farbstoffe.
- natürliche Harze, Fette oder Öle wie Kolophonium, Schellack, Leinöl, Rizinusöl oder Sojaöl.
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO).
- flammhemmende Substanzen, insbesondere die bereits genannten Füllstoffe Aluminiumhydroxid oder Magnesiumhydroxid, oder insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate.
- oberflächenaktive Substanzen, insbesondere Netzmittel, Verlaufsmittel, Entlüftungsmittel oder Entschäumer.
- Biozide, insbesondere Algizide, Fungizide oder das Pilzwachstum hemmende Substanzen.
oder weitere üblicherweise in feuchtigkeitshärtenden Zusammensetzungen eingesetzte Substanzen.
Es kann sinnvoll sein, gewisse Bestandteile vor dem Einmischen in die Zusammensetzung chemisch oder physikalisch zu trocknen.

In einer bevorzugten Ausführungsform ist die Zusammensetzung frei von Schwermetall-haltigen organischen Verbindungen. Insbesondere ist sie frei von Organozinn-Verbindungen.
In einer weiteren bevorzugten Ausführungsform ist die Zusammensetzung frei von cyclischen Amidinen, insbesondere frei von 1,8-Diazabicyclo[5.4.0]undec-7-en (DBU).

Die Zusammensetzung wird vorzugsweise unter Ausschluss von Feuchtigkeit hergestellt und aufbewahrt. Typischerweise ist die Zusammensetzung in einer geeigneten Verpackung oder Anordung, wie insbesondere einem Fass, einem Beutel oder einer Kartusche, unter Ausschluss von Feuchtigkeit lagerstabil.

Die Zusammensetzung kann in Form einer einkomponentigen oder in Form einer zweikomponentigen Zusammensetzung vorliegen.
Als "einkomponentig" wird im vorliegenden Dokument eine Zusammensetzung bezeichnet, bei welcher alle Bestandteile der Zusammensetzung vermischt im gleichen Gebinde gelagert werden und welche mit Feuchtigkeit härtbar ist.
Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet, wobei die Aushärtung erst durch die Einwirkung von Feuchtigkeit abläuft oder vervollständigt wird.

Bei der Applikation der Zusammensetzung auf mindestens einen Festkörper oder Artikel kommen die vorhandenen Silangruppen und gegebenenfalls vorhandene weitere feuchtigkeitsreaktive Gruppen in Kontakt mit Feuchtigkeit, wodurch die Zusammensetzung aushärtet. Das Wasser für die Aushärtung kann entweder aus der Luft stammen (Luftfeuchtigkeit), oder die Zusammensetzung kann mit einer Wasser enthaltenden Komponente in Kontakt gebracht werden, zum Beispiel durch Bestreichen, Besprühen oder Einmischen. Die Aushärtung erfolgt je nach Temperatur, Art des Kontaktes, der Menge der Feuchtigkeit und der Anwesenheit allfälliger Katalysatoren unterschiedlich schnell. Bei einer Aushärtung mittels Luftfeuchtigkeit wird zunächst eine Haut an der Oberfläche der Zusammensetzung gebildet. Die sogenannte Hautbildungszeit stellt ein Mass für die Aushärtungsgeschwindigkeit dar.
Daraus entsteht eine ausgehärtete Zusammensetzung, erhalten aus einer Zusammensetzung wie beschrieben nach deren Reaktion mit Feuchtigkeit.

Die Zusammensetzung verfügt im ausgehärteten Zustand über ausgeprägt elastische Eigenschaften, insbesondere eine hohe Festigkeit und eine hohe Dehnbarkeit, sowie über eine gute Wärmebeständigkeit und gute Haftungseigenschaften auf diversen Substraten. Dadurch eignet sie sich für eine Vielzahl von Verwendungen, insbesondere als Faserverbundwerkstoff (Composite), Vergussmasse, Dichtstoff, Klebstoff, Belag, Beschichtung oder Anstrich für Bau- und Industrieanwendungen, beispielsweise als Elektroisolationsmasse, Spachtelmasse, Fugendichtstoff, Schweiss- oder Bördelnahtdichtstoff, Parkettklebstoff, Montageklebstoff, Karrosserieklebstoff, Scheibenklebstoff, Sandwichelementklebstoff, Bodenbelag, Bodenbeschichtung, Balkonbeschichtung, Dachbeschichtung, Betonschutzbeschichtung, Parkhausbeschichtung oder als Schutzanstrich gegen Korrosion, als Versiegelung, Anstrich, Lack oder Primer. Besonders geeignet ist die Zusammensetzung als Klebstoff oder Dichtstoff oder als Beschichtung, insbesondere für die Fugenabdichtung und für elastische Klebeverbindungen in Bau- und Industrieanwendungen.

Ein weiterer Gegenstand der Erfindung ist die Verwendung der beschriebenen Zusammensetzung als elastischer Klebstoff oder Dichtstoff oder als elastische Beschichtung.

Für die Anwendung als Klebstoff oder Dichtstoff weist die Zusammensetzung bevorzugt eine pastöse Konsistenz mit strukturviskosen Eigenschaften auf. Ein solcher pastöser Klebstoff oder Dichtstoff wird insbesondere aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikationsroboters, auf ein Substrat aufgetragen.
Verklebt oder abgedichtet werden können zwei gleichartige oder zwei verschiedene Substrate.
Geeignete Substrate sind insbesondere
- Glas, Glaskeramik, Siebdruckkeramik, Beton, Mörtel, Backstein, Ziegel, Gips oder Natursteine wie Granit oder Marmor;
- Metalle oder Legierungen, wie Aluminium, Eisen, Stahl oder Buntmetalle, oder oberflächenveredelte Metalle oder Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke, insbesondere Automobildecklacke.
Die Substrate können bei Bedarf vor dem Applizieren des Klebstoffs oder Dichtstoffs vorbehandelt werden, insbesondere durch physikalische und/oder chemische Reinigungsverfahren oder das Aufbringen eines Haftvermittlers, einer Haftvermittlerlösung oder eines Primers.
Nach dem Verkleben oder Abdichten von zwei Substraten wird ein verklebter oder abgedichteter Artikel erhalten. Ein derartiger Artikel kann ein Bauwerk sein, insbesondere ein Bauwerk des Hoch- oder Tiefbaus, oder ein industrielles Gut oder ein Konsumgut sein, insbesondere ein Fenster, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter, ein Anbauteil davon sein.

Die Erfindung betrifft weiterhin eine Methode zur Senkung der Viskosität eines Polymers mit mindestens einer Endgruppe der Formel (I) durch Einführen von mindestens einer weiteren Silan-Endgruppe, welche nicht der Formel (I) entspricht.
Bevozugt ist die weitere Silan-Endgruppe ausgewählt aus Endgruppen der Formel (II) und Endgruppen der Formel (III), bevorzugt Endgruppen der Formel (II).
Dabei entsprechen die Endgruppen der Formel (I), (II) und (III) den vorgängig beschriebenen.
Mit dieser Methode ist es möglich, schnell aushärtende, relativ hochviskose, Endgruppen der Formel (I) aufweisende Polymere so zu modifizieren, dass sie eine deutlich niedrigere Viskosität aufweisen, wobei die schnelle Aushärtung weitgehend erhalten bleibt.
Bevorzugt wird die Methode so durchgeführt, dass das Verhältnis zwischen Endgruppen der Formel (I) und weiteren Silan-Endgruppen in den Bereich von 99/1 bis 5/95, bevorzugt 97/3 bis 20/80, insbesondere 95/5 bis 50/50, zu liegen kommt.
Bevorzugt wird die Methode mit dem beschriebenen Verfahren zur Herstellung der beschriebnen Polymer-Zubereitung durchgeführt.
Bevorzugt weist das Polymer nach der Durchführung dieser Methode eine Viskosität bei 20 °C im Bereich von 2 bis 200 Pa·s, besonders bevorzugt 3 bis 150 Pa·s, insbesondere 4 bis 100 Pa·s, am meisten bevorzugt 5 bis 75 Pa·s, auf.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet. "NK" steht für "Normklima".

"TFT" steht für "Hautbindungszeit" (Tack Free Time)

**Viskositäten** wurden bestimmt auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) bei einer Temperatur von 20 °C.

Die in den Tabellen 1 bis 7 mit "(Ref)" bezeichneten Zusammensetzungen sind Vergleichsbeispiele.

### 1. Verwendete Ausgangsmaterialen und Abkürzungen dafür:

- Acclaim® 12200: Polyoxypropylendiol mit niedrigem Ungesättigtheitsgrad, OH-Zahl 11.0 mg KOH/g, (von Bayer MaterialScience)
- Acclaim® 4200: Polyoxypropylendiol mit niedrigem Ungesättigtheitsgrad, OH-Zahl 28.0 mg KOH/g (von Bayer MaterialScience)
- Acclaim® 6300: Polyoxypropylentriol mit niedrigem Ungesättigtheitsgrad, OH-Zahl 28.0 mg KOH/g (von Bayer MaterialScience)
- Lupranol® 4003/1: EO-endcapped Polyoxypropylentriol mit 45 Gew.-% gepfropftem SAN-Polymer, OH-Zahl 20.0 mg KOH/g (von BASF)
- Synalox® 100-150B: Butanol-gestartetes Polyoxypropylen-monol, Molekulargewicht 2200 g/mol (von Dow)
- Polyvest® EP HT: Hydroxyl-terminiertes Polybutadien, OH-Zahl 48 mg KOH/g, Funktionalität ca. 2.5 (von Evonik Industries)
- UCON® Hydrolube APPG-800R: Polyoxypropylen-monoallylether, OH-Zahl 70 mg KOH/g, 3.5 Gew-% Allyl, Molekulargewicht ca. 800 g/mol, (von Dow)
- IPDI: Isophorondiisocyanat, Vestanat® IPDI (von Evonik)
- TDI: 2,4-Toluylendiisocyanat, Desmodur® T-100 (von Bayer MaterialScience)
- DIDP: Diisodecylphthalat
- Tyzor® IBAY: Bis(ethylacetoacetato)diisobutoxy-titan(IV) (von Dorf Ketal)
- Tyzor® AA: Bis(acetylacetonato)diisopropoxy-titan(IV) (von Dorf Ketal)
- VTEO: Vinyltriethoxysilan
- VTMO: Vinyltrimethoxysilan
- PCC: gefälltes Calciumcarbonat, Socal® U1 S2 (von Solvay)
- GCC: gemahlenes Calciumcarbonat, Omyacarb® 5 GU (von Omya)
- DBU: 1,8-Diazabicyclo[5.4.0]undec-7-en
- Geniosil® GF 94: 3-(2-Aminoethyl)aminopropyltriethoxysilan

### Hydroxysilane:

### Hydroxysilan 1: N-(3-Triethoxysilylpropyl)-2-hydroxypropanamid

In einem Rundkolben wurden 20.00 g (90.4 mmol) 3-Aminopropyltriethoxysilan und 6.71 g (46.6 mmol) L-Lactid unter Stickstoffatmosphäre während 3 h bei 80 °C gerührt, bis mittels IR-Spektroskopie kein Reaktionsfortschritt mehr festgestellt wurde. Das Rohprodukt wurde während 15 min bei 60 °C und ca. 10 mbar nachbehandelt. Es wurde ein farbloses flüssiges Produkt erhalten.

### Hydroxysilan 2: N-(3-Triethoxysilylpropyl)-4-hydroxypentanamid

In einem Rundkolben wurden 20.00 g (90.4 mmol) 3-Aminopropyltriethoxysilan und 10.86 g (108.5 mmol) γ-Valerolacton unter Stickstoffatmosphäre während 6 h bei 135 °C gerührt, bis mittels IR-Spektroskopie kein Reaktionsfortschritt mehr festgestellt wurde. Das Rohprodukt wurde während 30 min bei 80 °C und ca. 2 mbar nachbehandelt. Es wurde ein farbloses flüssiges Produkt erhalten.

### Hydroxysilan 3: Mischung enthaltend 2-Hydroxypropyl-N-(3-triethoxysilylpropyl)carbamat und 1-Hydroxyprop-2-yl-N-(3-triethoxysilylpropyl)carbamat

In einem Rundkolben wurden 20.00 g (90.4 mmol) 3-Aminopropyltriethoxysilan und 9.51 g (93.1 mmol) 1,2-Propylencarbonat unter Stickstoffatmosphäre während 5 h bei 80 °C gerührt, bis mittels IR-Spektroskopie kein Reaktionsfortschritt mehr festgestellt wurde. Das Rohprodukt wurde während 10 min bei 60 °C und ca. 10 mbar nachbehandelt. Es wurde ein farbloses flüssiges Produkt erhalten.

### Hydroxysilan 4: N-(3-Diethoxymethylsilylpropyl)-2-hydroxypropanamid

In einem Rundkolben wurden 17.30 g (90.4 mmol) 3-Aminopropyldiethoxymethylsilan (Dynasylan® 1505 von Evonik Industries) und 6.71 g (46.6 mmol) L-Lactid unter Stickstoffatmosphäre während 3 h bei 80 °C gerührt, bis mittels IR-Spektroskopie kein Reaktionsfortschritt mehr festgestellt wurde. Das Rohprodukt wurde während 15 min bei 60 °C und ca. 10 mbar nachbehandelt. Es wurde ein farbloses flüssiges Produkt erhalten.

### Hydroxysilan 5: N-(3-Trimethoxysilylpropyl)-2-hydroxypropanamid

In einem Rundkolben wurden 16.21 g (90.4 mmol) 3-Aminopropyltrimethoxysilan und 6.71 g (46.6 mmol) L-Lactid unter Stickstoffatmosphäre während 3 h bei 80 °C gerührt, bis mittels IR-Spektroskopie kein Reaktionsfortschritt mehr festgestellt wurde. Das Rohprodukt wurde während 15 min bei 60 °C und ca. 10 mbar nachbehandelt. Es wurde ein farbloses flüssiges Produkt erhalten.

### Hydroxysilan 6: N-(3-Dimethoxymethylsilylpropyl)-2-hydroxypropanamid

In einem Rundkolben wurden 14.76 g (90.4 mmol) 3-Aminopropyldimethoxymethylsilan (Silquest® A-2110 von Momentive) und 6.71 g (46.6 mmol) L-Lactid unter Stickstoffatmosphäre während 3 h bei 80 °C gerührt, bis mittels IR-Spektroskopie kein Reaktionsfortschritt mehr festgestellt wurde. Das Rohprodukt wurde während 15 min bei 60 °C und ca. 10 mbar nachbehandelt. Es wurde ein farbloses flüssiges Produkt erhalten.

### Hydroxysilan 7: N-(2,2-Dimethyl-4-dimethoxymethylsilylbutyl)-2-hydroxypropanamid

In einem Rundkolben wurden 18.57 g (90.4 mmol) 4-Amino-3,3-dimethylbutyldiimethoxymethylsilan (Silquest® A-2639 von Momentive) und 6.71 g (46.6 mmol) L-Lactid unter Stickstoffatmosphäre während 3 h bei 80 °C gerührt, bis mittels IR-Spektroskopie kein Reaktionsfortschritt mehr festgestellt wurde. Das Rohprodukt wurde während 15 min bei 60 °C und ca. 10 mbar nachbehandelt. Es wurde ein farbloses flüssiges Produkt erhalten.

### Hydroxysilan 8: N-(2,2-Dimethyl-4-trimethoxysilylbutyl)-2-hydroxypropanamid

In einem Rundkolben wurden 20.01 g (90.4 mmol) 4-Amino-3,3-dimethylbutyltrimethoxysilan (Silquest® A-1637 von Momentive) und 6.71 g (46.6 mmol) L-Lactid unter Stickstoffatmosphäre während 3 h bei 80 °C gerührt, bis mittels IR-Spektroskopie kein Reaktionsfortschritt mehr festgestellt wurde. Das Rohprodukt wurde während 15 min bei 60 °C und ca. 10 mbar nachbehandelt. Es wurde ein farbloses flüssiges Produkt erhalten.

### 2. Herstellung von silanfunktionellen Polymeren:

### Erfindungsgemässe Polymer-Zubereitungen:

### Polymer M-1:

### Unter Feuchtigkeitsausschluss wurden 50.000 g Acclaim® 12200 und 0.05 g Vinyltriethoxysilan während 30 min bei 80°C unter Vakuum gerührt. Anschliessend wurden 0.050 g Bismuttris(neodecanoat) (10 Gewichts-% in DIDP) und 0.124 g Isocyanatopropyltriethoxysilan zugegeben und die Reaktionsmischung während 2 h bei 80 °C unter Vakuum gerührt, bis mittels IR-Spektroskopie keine Isocyanatgruppen mehr nachweisbar waren. Dann wurden 2.175 g IPDI zugegeben und 2 h bei 80 °C unter Vakuum gerührt. Anschliessend wurden 3.206 g Hydroxysilan 1 zugegeben und 90 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 149 Pa·s(20 °C).

### Polymer M-2:

Das Polymer M-2 wurde hergestellt und aufbewahrt wie für das Polymer M-1 beschrieben, wobei aber 0.247 g Isocyanatopropyltriethoxysilan, 2.061 g IPDI und 3.037 g **Hydroxysilan 1** eingesetzt wurden. Es war klar und hatte am Folgetag der Herstellung eine Viskosität von 132 Pa·s(20 °C).

### Polymer M-3:

Das Polymer M-3 wurde hergestellt und aufbewahrt wie für das Polymer M-1 beschrieben, wobei aber 0.742 g Isocyanatopropyltriethoxysilan, 1.603 g IPDI und 2.362 g **Hydroxysilan 1** eingesetzt wurden. Es war klar und hatte am Folgetag der Herstellung eine Viskosität von 75 Pa·s(20 °C).

### Polymer M-4:

Das Polymer M-4 wurde hergestellt und aufbewahrt wie für das Polymer M-1 beschrieben, wobei aber 1.237 g Isocyanatopropyltriethoxysilan, 1.145 g IPDI und 1.687 g **Hydroxysilan 1** eingesetzt wurden. Es war klar und hatte am Folgetag der Herstellung eine Viskosität von 38 Pa·s(20 °C).

### Polymer M-5:

Das Polymer M-5 wurde hergestellt und aufbewahrt wie für das Polymer M-1 beschrieben, wobei aber 1.732 g Isocyanatopropyltriethoxysilan, 0.687 g IPDI und 1.012 g **Hydroxysilan 1** eingesetzt wurden. Es war klar und hatte am Folgetag der Herstellung eine Viskosität von 22 Pa·s(20 °C).

### Polymer M-6:

Das Polymer M-6 wurde hergestellt und aufbewahrt wie für das Polymer M-1 beschrieben, wobei aber 1.979 g Isocyanatopropyltriethoxysilan, 0.458 g IPDI und 0.675 g **Hydroxysilan 1** eingesetzt wurden. Es war klar und hatte am Folgetag der Herstellung eine Viskosität von 17 Pa·s(20 °C).

### Polymer M-7:

Das Polymer M-7 wurde hergestellt und aufbewahrt wie für das Polymer M-1 beschrieben, wobei aber 2.226 g Isocyanatopropyltriethoxysilan, 0.229 g IPDI und 0.337 g **Hydroxysilan 1** eingesetzt wurden. Es war klar und hatte am Folgetag der Herstellung eine Viskosität von 13 Pa·s(20 °C).

### Polymer M-8:

Das Polymer M-8 wurde hergestellt und aufbewahrt wie für das Polymer M-1 beschrieben, wobei aber 2.350 g Isocyanatopropyltriethoxysilan, 0.114 g IPDI und 0.169 g **Hydroxysilan 1** eingesetzt wurden. Es war klar und hatte am Folgetag der Herstellung eine Viskosität von 11 Pa·s(20 °C).

### Polymer M-10:

Unter Feuchtigkeitsausschluss wurden 250.00 g Acclaim® 12200 und 0.25 g Vinyltriethoxysilan während 30 min bei 80°C unter Vakuum gerührt. Anschliessend wurden 0.25 g Bismuttris(neodecanoat) (10 Gewichts-% in DIDP) und 6.43 g Isocyanatopropyltriethoxysilan zugegeben und die Reaktionsmischung während 2 h bei 80 °C unter Vakuum gerührt, bis mittels IR-Spektroskopie keine Isocyanatgruppen mehr nachweisbar waren. Dann wurden 5.78 g IPDI zugegeben und 2 h bei 80 °C unter Vakuum gerührt. Anschliessend wurden 8.80 g **Hydroxysilan 1** zugegeben und 90 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 43.1 Pa·s(20 °C).

### Polymer M-11:

Das Polymer M-11 wurde hergestellt und aufbewahrt wie für das Polymer M-10 beschrieben, wobei aber statt dem Hydroxysilan 1 9.64 g **Hydroxysilan 2** verwendet wurden. Das erhaltene silanfunktionelle Polymer war leicht trüb und hatte am Folgetag der Herstellung eine Viskosität von 50.1 Pa·s(20 °C).

### Polymer M-12:

Das Polymer M-12 wurde hergestellt und aufbewahrt wie für das Polymer M-10 beschrieben, wobei aber statt dem Hydroxysilan 1 9.71 g **Hydroxysilan 3** verwendet wurden. Mittels IR-Spektroskopie waren nach dem beschriebenen Prozess aber noch Isocyanatgruppen vorhanden, worauf weitere 0.97 g **Hydroxysilan 3** zugegeben und 60 min bei 80°C unter Vakuum gerührt wurde, bis mittels IR-Spektroskopie keine Isocyanatgruppen mehr nachweisbar waren. Das erhaltene silanfunktionelle Polymer war leicht trüb und hatte am Folgetag der Herstellung eine Viskosität von 33.2 Pa·s(20 °C).

### Polymer M-13:

Das Polymer M-13 wurde hergestellt und aufbewahrt wie für das Polymer M-10 beschrieben, wobei aber statt IPDI 4.53 g TDI verwendet wurden. Das erhaltene silanfunktionelle Polymer war klar und hatte am Folgetag der Herstellung eine Viskosität von 28.8 Pa·s(20 °C).

### Polymer M-14:

Unter Feuchtigkeitsausschluss wurden 250.00 g Acclaim® 12200 und 0.25 g Vinyltriethoxysilan während 30 min bei 80°C unter Vakuum gerührt. Anschliessend wurden 0.25 g Bismuttris(neodecanoat) (10 Gewichts-% in DIDP) und 4.95 g Isocyanatopropyltriethoxysilan zugegeben und die Reaktionsmischung während 2 h bei 80 °C unter Vakuum gerührt, bis mittels IR-Spektroskopie keine Isocyanatgruppen mehr nachweisbar waren. Dann wurden 5.56 g IPDI zugegeben und 2 h bei 80 °C unter Vakuum gerührt. Anschliessend wurden 6.75 g **Hydroxysilan 1** zugegeben und 90 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 60.3 Pa·s(20 °C).

### Polymer M-15:

Unter Feuchtigkeitsausschluss wurden 210.00 g Acclaim® 12200 und 0.25 g Vinyltriethoxysilan während 30 min bei 80°C unter Vakuum gerührt. Anschliessend wurden 0.25 g Bismuttris(neodecanoat) (10 Gewichts-% in DIDP) und 3.96 g Isocyanatopropyltriethoxysilan zugegeben und die Reaktionsmischung während 2 h bei 80 °C unter Vakuum gerührt, bis mittels IR-Spektroskopie keine Isocyanatgruppen mehr nachweisbar waren. Dann wurden 28.00 g Acclaim® 4200 und 7.11 g IPDI zugegeben und 2 h bei 80 °C unter Vakuum gerührt. Anschliessend wurden 8.10 g **Hydroxysilan 1** zugegeben und 90 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 104.0 Pa·s(20 °C).

### Polymer M-16:

Das Polymer M-16 wurde hergestellt und aufbewahrt wie für das Polymer M-10 beschrieben, wobei aber statt dem Hydroxysilan 1 7.90 g **Hydroxysilan 4** verwendet wurden. Das erhaltene silanfunktionelle Polymer war klar und hatte am Folgetag der Herstellung eine Viskosität von 47.0 Pa·s(20 °C).

### Polymer M-17:

Unter Feuchtigkeitsausschluss wurden 250.00 g Acclaim® 12200 und 0.25 g Vinyltrimethoxysilan während 30 min bei 80°C unter Vakuum gerührt. Anschliessend wurden 0.25 g Bismuttris(neodecanoat) (10 Gewichts-% in DIDP) und 5.34 g Isocyanatopropyltrimethoxysilan zugegeben und die Reaktionsmischung während 45 min bei 80 °C ohne Vakuum, dann 45 min bei 80 °C unter Vakuum, gerührt, bis mittels IR-Spektroskopie keine Isocyanatgruppen mehr nachweisbar waren. Dann wurden 5.78 g IPDI zugegeben und 2 h bei 80 °C unter Vakuum gerührt. Anschliessend wurden 7.54 g **Hydroxysilan 5** zugegeben und 90 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 37.9 Pa·s(20 °C).

### Polymer M-18:

Das Polymer M-18 wurde hergestellt und aufbewahrt wie für das Polymer M-17 beschrieben, wobei aber statt dem Hydroxysilan 5 7.06 g **Hydroxysilan 6** verwendet wurden. Das erhaltene silanfunktionelle Polymer war klar und hatte am Folgetag der Herstellung eine Viskosität von 68.0 Pa·s(20 °C).

### Polymer M-19:

Das Polymer M-19 wurde hergestellt und aufbewahrt wie für das Polymer M-17 beschrieben, wobei aber statt dem Hydroxysilan 5 8.32 g **Hydroxysilan 7** verwendet wurden. Das erhaltene silanfunktionelle Polymer war klar und hatte am Folgetag der Herstellung eine Viskosität von 72.0 Pa·s(20 °C).

### Polymer M-20:

Das Polymer M-20 wurde hergestellt und aufbewahrt wie für das Polymer M-17 beschrieben, wobei aber statt dem Hydroxysilan 5 8.80 g **Hydroxysilan 8** verwendet wurden. Das erhaltene silanfunktionelle Polymer war klar und hatte am Folgetag der Herstellung eine Viskosität von 70.0 Pa·s(20 °C).

### Polymer M-21:

Unter Feuchtigkeitsausschluss wurden 250.00 g Acclaim® 12200 und 0.25 g Vinyltriethoxysilan während 30 min bei 80°C unter Vakuum gerührt. Dann wurden 0.25 g Bismuttris(neodecanoat) (10 Gewichts-% in DIDP) und 3.71 g Isocyanatopropyltriethoxysilan zugegeben und die Reaktionsmischung während 60 min bei 80 °C unter Vakuum gerührt, bis mittels IR-Spektroskopie keine Isocyanatgruppen mehr nachweisbar waren. Anschliessend wurden 8.23 g IPDI zugegeben und 2 h bei 80 °C unter Vakuum gerührt. Schliesslich wurden 10.27 g **Hydroxysilan 1** zugegeben, 90 min bei 80 °C unter Vakuum gerührt, dann 3.94 g N-(3-Triethoxysilylpropyl)asparaginsäurediethylester zugegeben und nochmal 30 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 72.2 Pa·s(20 °C).

### Polymer M-22:

Unter Feuchtigkeitsausschluss wurden 200.00 g Acclaim® 4200 und 0.25 g Vinyltriethoxysilan während 30 min bei 80°C unter Vakuum gerührt. Dann wurden 0.25 g Bismuttris(neodecanoat) (10 Gewichts-% in DIDP) und 7.41 g IPDI zugegeben und die Reaktionsmischung während 1 h bei 80 °C unter Vakuum gerührt, bis mittels IR-Spektroskopie keine Isocyanatgruppen mehr nachweisbar waren. Dann wurden 4.21 g Isocyanatopropyltriethoxysilan zugegeben und die Reaktionsmischung während 1 h bei 80 °C unter Vakuum gerührt, bis mittels IR-Spektroskopie keine Isocyanatgruppen mehr nachweisbar waren. Dann wurden 3.83 g IPDI zugegeben und 2 h bei 80 °C unter Vakuum gerührt. Dann wurden 6.07 g **Hydroxysilan 1** zugegeben und 90 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 153 Pa·s(20 °C).

### Polymer M-23:

Das Polymer M-23 wurde hergestellt und aufbewahrt wie für das Polymer M-10 beschrieben, wobei aber 200.00 g Acclaim® 6300 anstelle vom Acclaim® 12200 und 12.86 g Isocyanatopropyltriethoxysilan, 11.56 g IPDI und 17.54 g **Hydroxysilan 1** verwendet wurden. Das erhaltene silanfunktionelle Polymer war klar und hatte am Folgetag der Herstellung eine Viskosität von 25.9 Pa·s (20 °C).

### Polymer M-24:

Das Polymer M-24 wurde hergestellt und aufbewahrt wie für das Polymer M-10 beschrieben, wobei aber 277.8 g Lupranol® 4003/1 anstelle vom Acclaim® 12200 und 12.86 g Isocyanatopropyltriethoxysilan, 11.56 g IPDI und 17.54 g **Hydroxysilan 1** verwendet wurden. Das erhaltene silanfunktionelle Polymer war klar und hatte am Folgetag der Herstellung eine Viskosität von 94.7 Pa·s (20 °C).

### Polymer M-25:

Unter Feuchtigkeitsausschluss wurden 250.00 g Acclaim® 12200 und 0.25 g Vinyltriethoxysilan während 30 min bei 80°C unter Vakuum gerührt. Dann wurden 0.25 g Bismuttris(neodecanoat) (10 Gewichts-% in DIDP) und 8.53 g Isocyanatopropyltriethoxysilan zugegeben und die Reaktionsmischung während 2 h bei 80 °C unter Vakuum gerührt, bis mittels IR-Spektroskopie keine Isocyanatgruppen mehr nachweisbar waren. Anschliessend wurden 43.86 g Synalox® 100-150B und 7.78 g IPDI zugegeben und 2 h bei 80 °C unter Vakuum gerührt. Dann wurden 11.74 g **Hydroxysilan 1** zugegeben und 90 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 18.4 Pa·s(20 °C).

### Polymer M-26:

Das Polymer M-26 wurde hergestellt und aufbewahrt wie für das Polymer M-10 beschrieben, wobei aber 150.00 g Polyvest® EP HT anstelle vom Acclaim® 12200 und 16.08 g Isocyanatopropyltriethoxysilan, 14.23 g IPDI und 20.03 g **Hydroxysilan 1** verwendet wurden. Das erhaltene silanfunktionelle Polymer war klar und hatte am Folgetag der Herstellung eine Viskosität von 204 Pa·s(20 °C).

### Polymer M-27:

Unter Feuchtigkeitsausschluss wurden 250.00 g NCO-Polymer 1, dessen Herstellung nachfolgend beschrieben ist, 0.25 g Bismuttris(neodecanoat) (10 Gewichts-% in DIDP) und 3.93 g **Hydroxysilan 1** unter Stickstoffatmosphäre bei 80 °C gerührt, bis die Isocyanat-Bande im IR-Spektrum konstant war (ca. 2 h). Dann wurden 11.29 g N-(3-Triethoxysilylpropyl)asparaginsäurediethylester zugegeben und 90 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 109 Pa·s(20 °C).

Das **NCO-Polymer 1** wurde hergestellt, indem unter Feuchtigkeitsausschluss 720.0 g Acclaim® 12200, 34.5 g IPDI, 80.0 g DIDP und 0.1 g Bismuttris(neodecanoat) (10 Gewichts-% in DIDP) unter Rühren auf 90 °C aufgeheizt und auf dieser Temperatur belassen wurden, bis der titrimetrisch bestimmte Gehalt an freien Isocyanatgruppen einen stabilen Wert von 0.73 Gewichts-% erreicht hatte. Das Isocyanatgruppen aufweisende Polymer wurde auf Raumtemperatur abgekühlt und unter Ausschluss von Feuchtigkeit aufbewahrt. Es war klar und hatte am Folgetag der Herstellung eine Viskosität von 31 Pa·s(20 °C).

### Polymer M-28:

Das Polymer M-28 wurde hergestellt und aufbewahrt wie für das Polymer M-27 beschrieben, wobei aber 8.42 g **Hydroxysilan 1** und 5.27 g N-(3-Triethoxysilylpropyl)asparaginsäurediethylester eingesetzt wurden. Das erhaltene silanfunktionelle Polymer war klar und hatte am Folgetag der Herstellung eine Viskosität von 168 Pa·s(20 °C)

### Polymer M-29:

Unter Feuchtigkeitsausschluss und Stickstoffatmosphäre wurden 10.00 g getrocknetes UCON® Hydrolube APPG-800R, 10 µl Karstedt Katalysator und 1.66 g Triethoxysilan bei 60°C während 1 h umgesetzt, bis mittels IR-Spektroskopie keine Allylgruppen mehr nachweisbar waren. Dann wurde die Reaktionsmischung 20 min bei 80 °C und 15 mbar gerührt. Anschliessend wurden 2.29 g IPDI und 0.05 g Dibutylzinndilaurat zugegeben und 1 h bei 80 °C unter Vakuum gerührt, bis die Isocyanat-Bande im IR-Spektrum konstant war. Schliesslich wurden 3.55 g **Hydroxysilan 1** und 0.05 g Coscat® 83 (Bi(III)neodecanoat, von Vertellus) zugegeben und 60 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar, leicht dunkel gefärbt und hatte am Folgetag der Herstellung eine Viskosität von 2.8 Pa·s(20 °C).

### Polymer M-30:

Das Polymer M-30 wurde hergestellt und aufbewahrt wie für das Polymer M-29 beschrieben, wobei aber anstelle von Hydroxysilan 1 3.89 g **Hydroxysilan 2** eingesetzt wurden. Das erhaltene silanfunktionelle Polymer war minim trüb, leicht gelblich gefärbt und hatte am Folgetag der Herstellung eine Viskosität von 3.7 Pa·s(20 °C)

### Silanfunktionelle Vergleichs-Polymere mit nur Endgruppen der Formel (I):

### Polymer E-1:

Unter Feuchtigkeitsausschluss wurden 250.00 g Acclaim® 12200 und 0.25 g Vinyltriethoxysilan während 30 min bei 80°C unter Vakuum gerührt. Anschliessend wurden 0.25 g Bismuttris(neodecanoat) (10 Gewichts-% in DIDP) und 11.56 g IPDI zugegeben und 2 h bei 80 °C unter Vakuum gerührt. Dann wurden 17.32 g **Hydroxysilan 1** zugegeben und 90 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 263.5 Pa·s(20 °C).

### Polymer E-2:

Unter Feuchtigkeitsausschluss wurden 250.00 g Acclaim® 12200 und 0.25 g Vinyltriethoxysilan während 30 min bei 80°C unter Vakuum gerührt. Anschliessend wurden 0.25 g Bismuttris(neodecanoat) (10 Gewichts-% in DIDP) und 11.56 g IPDI zugegeben und 2 h bei 80 °C unter Vakuum gerührt. Dann wurden 19.93 g **Hydroxysilan 2** zugegeben und 120 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war trüb und hatte am Folgetag der Herstellung eine Viskosität von 272.9 Pa·s(20 °C).

### Polymer E-3:

Unter Feuchtigkeitsausschluss wurden 250.00 g Acclaim® 12200 und 0.25 g Vinyltriethoxysilan während 30 min bei 80°C unter Vakuum gerührt. Anschliessend wurden 0.25 g Bismuttris(neodecanoat) (10 Gewichts-% in DIDP) und 11.56 g IPDI zugegeben und 2 h bei 80 °C unter Vakuum gerührt. Dann wurden 19.08 g **Hydroxysilan 3** zugegeben und 120 min bei 80 °C unter Vakuum gerührt. Mittels IR-Spektroskopie waren noch Isocyanatgruppen vorhanden, worauf weitere 1.91 g **Hydroxysilan 3** zugegeben und 60 min bei 80°C unter Vakuum gerührt wurde, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war trüb und hatte am Folgetag der Herstellung eine Viskosität von 169.9 Pa·s(20 °C).

### Polymer E-4:

Unter Feuchtigkeitsausschluss wurden 250.00 g Acclaim® 12200 und 0.25 g Vinyltriethoxysilan während 30 min bei 80°C unter Vakuum gerührt. Anschliessend wurden 0.25 g Bismuttris(neodecanoat) (10 Gewichts-% in DIDP) und 9.06 g TDI zugegeben und 1 h bei 80 °C ohne Vakuum, dann 1 h bei 80 °C unter Vakuum, gerührt. Anschliessend wurden 17.32 g **Hydroxysilan 1** zugegeben und 90 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 85.2 Pa·s(20 °C).

### Polymer E-5:

Unter Feuchtigkeitsausschluss wurden 250.00 g Acclaim® 12200 und 0.25 g Vinyltrimethoxysilan während 30 min bei 80°C unter Vakuum gerührt. Anschliessend wurden 0.25 g Bismuttris(neodecanoat) (10 Gewichts-% in DIDP) und 11.56 g IPDI zugegeben und 2 h bei 80 °C unter Vakuum gerührt. Dann wurden 14.83 g **Hydroxysilan 5** zugegeben und 90 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 179.1 Pa·s(20 °C).

### Silanfunktionelle Vergleichs-Polymere mit weiteren Silan-Endgruppen:

### Polymer R-1:

Unter Feuchtigkeitsausschluss wurden 250.00 g Acclaim® 12200 und 0.25 g Vinyltriethoxysilan während 30 min bei 80 °C gerührt und dann 0.25 g Bismut-tris(neodecanoat) (10 Gewichts-% in DIDP) und 12.49 g Isocyanatopropyltriethoxysilan zugegeben und die Reaktionsmischung während 2 h bei 80 °C unter Vakuum gerührt. Anschliessend wurden 1.50 g Ethanol zugegeben und 15 min ohne Vakuum, dann weitere 15 min unter Vakuum, gerührt. Im FT-IR wurde keine Isocyanatbande mehr festgestellt. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 10 Pa·s.

### Polymer R-2:

Unter Feuchtigkeitsausschluss wurden 250.00 g Acclaim® 12200 und 0.25 g Vinyltrimethoxysilan während 30 min bei 80 °C gerührt und dann 0.25 g Bis-muttris(neodecanoat) (10 Gewichts-% in DIDP) und 10.37 g Isocyanatopropyltrimethoxysilan zugegeben und die Reaktionsmischung während 2 h bei 80 °C unter Vakuum gerührt. Anschliessend wurden 1.50 g Methanol zugegeben und 15 min ohne Vakuum, dann weitere 15 min unter Vakuum, gerührt. Im FT-IR wurde keine Isocyanatbande mehr festgestellt. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 11 Pa·s.

### Polymer R-3:

Das Polymer R-3 wurde hergestellt und aufbewahrt wie für das Polymer M-25 beschrieben, wobei aber statt dem Hydroxysilan 1 15.74 g N-(3-Triethoxysilylpropyl)asparaginsäurediethylester verwendet wurden. Das erhaltene silanfunktionelle Polymer war klar und hatte am Folgetag der Herstellung eine Viskosität von 14.2 Pa·s(20 °C).

### Polymer R-4:

Unter Feuchtigkeitsausschluss wurden 100.00 g NCO-Polymer 1, dessen Herstellung für Polymer M-27 beschrieben wurde, 0.06 g Bismuttris(neodecanoat) (10 Gewichts-% in DIDP) und 7.19 g N-(3-Triethoxysilylpropyl)asparaginsäurediethylester unter Stickstoffatmosphäre bei 80 °C gerührt, bis mittels IR-Spektroskopie keine Isocyanatgruppen mehr nachweisbar waren (ca. 1.5 h). Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 83 Pa·s (20 °C).

### 3. feuchtigkeitshärtende Zusammensetzungen (ungefüllt)

### Zusammensetzungen Z1 bis Z18:

Für jede Zusammensetzung wurden die in der Tabelle 1 angegebenen Inhaltsstoffe in den angegebenen Mengen (in Gewichtsteilen) in einem Vakuummischer bei 50 °C unter Feuchtigkeitsausschluss während 30 min zu einer homogenen Paste verarbeitet und aufbewahrt. Jede Zusammensetzung wurde folgendermassen geprüft:
Die **Viskosität** wurde am Folgetag der Herstelltung bestimmt, mit einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) bei einer Temperatur von 20 °C.

Zur Bestimmung der **Hautbildungszeit** (TFT) wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben.

**Tabelle 1: Zusammensetzung und Eigenschaften der Zusammensetzungen Z1 bis Z10.**

| **Zusammensetzung** | **Z1 (Ref)** | **Z2** | **Z3** | **Z4** | **Z5** | **Z6** | **Z7** | **Z8** | **Z9** | **Z10 (Ref)** |
|---|---|---|---|---|---|---|---|---|---|---|
| Polymer | **E-1** 100.0 | **M-1** 100.0 | **M-2** 100.0 | **M-3** 100.0 | **M-4** 100.0 | **M-5** 100.0 | **M-6** 100.0 | **M-7** 100.0 | **M-8** 100.0 | **R-1** 100.0 |
| Tyzor® IBAY | 2.5 | 2.5 | 2.5 | 2.5 | 2.5 | 2.5 | 2.5 | 2.5 | 2.5 | 2.5 |
| Endgr.(I)/andere¹ | 100/0 | 95/5 | 90/10 | 70/30 | 50/50 | 30/70 | 20/80 | 10/90 | 5/95 | 0/100 |
| Viskosität [Pa·s] | 258 | 149 | 132 | 75 | 38 | 22 | 17 | 13 | 11 | 9 |
| TFT [min.] | 66 | 72 | 75 | 74 | 78 | 86 | 90 | 90 | 88 | 86 |

| | | | | | | | | | | |
|---|---|---|---|---|---|---|---|---|---|---|
| ¹ Verhältnis der Anzahl Endgruppen der Formel (I) zur Anzahl anderer Silangruppen | | | | | | | | | | |

**Tabelle 2: Zusammensetzung und Eigenschaften der Zusammensetzungen Z1 und Z10 bis Z18.**

| **Zusammensetzung** | **Z1 (Ref)** | **Z11 (Ref)** | **Z12 (Ref)** | **Z13 (Ref)** | **Z14 (Ref)** | **Z15 (Ref)** | **Z16 (Ref)** | **Z17 (Ref)** | **Z18 (Ref)** | **Z10 (Ref)** |
|---|---|---|---|---|---|---|---|---|---|---|
| Polymer | **E-1** 100.0 | **E-1** 95.0 | **E-1** 90.0 | **E-1** 70.0 | **E-1** 50.0 | **E-1** 30.0 | **E-1** 20.0 | **E-1** 10.0 | **E-1** 5.0 | **R-1** 100.0 |
| | | **R-1** 5.0 | **R-1** 10.0 | **R-1** 30.0 | **R-1** 50.0 | **R-1** 70.0 | **R-1** 80.0 | **R-1** 90.0 | **R-1** 95.0 | |
| Tyzor® IBAY | 2.5 | 2.5 | 2.5 | 2.5 | 2.5 | 2.5 | 2.5 | 2.5 | 2.5 | 2.5 |
| Viskosität [Pa·s] | 258 | 190 | 162 | 90 | 45 | 24 | 17 | 13 | 11 | 9 |
| TFT [min.] | 66 | 69 | 73 | 71 | 71 | 72 | 74 | 79 | 81 | 86 |

### 4. feuchtigkeitshärtende Zusammensetzungen (gefüllt)

### Zusammensetzungen Z19 bis Z56

Für jede Zusammensetzung wurden die in den Tabellen 3 bis 7 angegebenen Inhaltsstoffe in den angegebenen Mengen (in Gewichtsteilen) in einem Vakuummischer bei 50 °C unter Feuchtigkeitsausschluss während 30 min zu einer homogenen Paste verarbeitet und aufbewahrt. Jede Zusammensetzung wurde folgendermassen geprüft:
Die **Viskosität** und die **Hautbildungszeit** wurden wie für die Zusammensetzung **Z1** beschrieben geprüft.

Die **Shore A-Härte** wurde bestimmt nach DIN 53505 an während 14 Tagen im Normklima ausgehärteten Prüfkörpern.

Zur Bestimmung der mechanischen Eigenschaften wurde die Zusammensetzung auf einer PTFE-beschichteten Folie zu einem Film von 2 mm Dicke ausgegossen, dieser während 2 Wochen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung** und **E-Modul** (E-Modul bei 0.5-5 % Dehnung) geprüft.

Die Resultate sind in den Tabellen 3 bis 7 angegeben.

Die *Verdickerpaste* wurde hergestellt, indem in einem Vakuummischer 300 g Diisodecylphthalat und 48 g 4,4'-Methylendiphenyldiisocyanat (Desmodur® 44 MC L; von Bayer) vorgelegt, leicht aufgewärmt und anschliessend unter starkem Rühren 27 g Monobutylamin langsam zugetropft wurden. Die entstehende Paste wurde unter Vakuum und Kühlung eine Stunde weitergerührt.

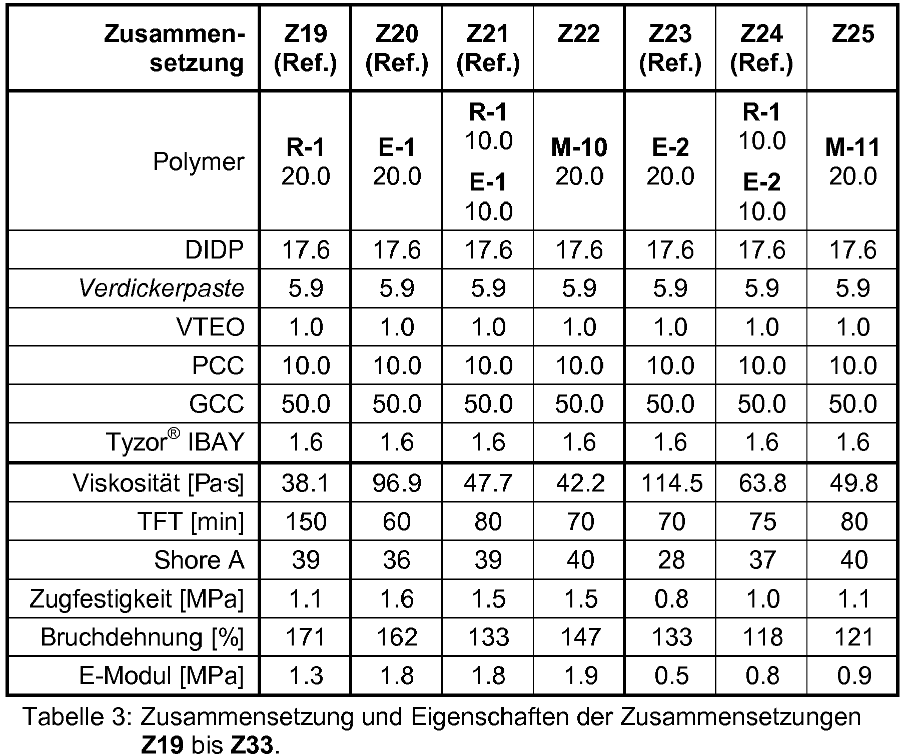

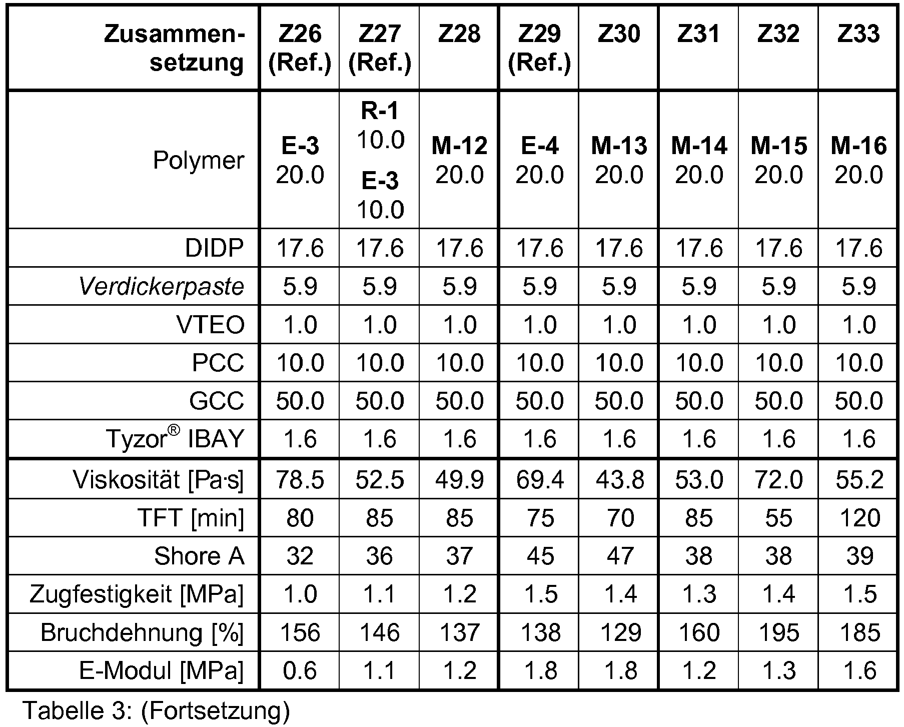

**Tabelle 4: Zusammensetzung und Eigenschaften der Zusammensetzungen Z34 bis Z40.**

| **Zusammensetzung** | **Z34 (Ref.)** | **Z35 (Ref.)** | **Z36 (Ref.)** | **Z37** | **Z38** | **Z39** | **Z40** |
|---|---|---|---|---|---|---|---|
| Polymer | **R-2** 20.0 | **E-5** 20.0 | **R-2** 10.0 | **M-17** 20.0 | **M-18** 20.0 | **M-19** 20.0 | **M-20** 20.0 |
| | | | **E-5** 10.0 | | | | |
| DIDP | 17.6 | 17.6 | 17.6 | 17.6 | 17.6 | 17.6 | 17.6 |
| *Verdickerpaste* | 5.9 | 5.9 | 5.9 | 5.9 | 5.9 | 5.9 | 5.9 |
| VTMO | 1.0 | 1.0 | 1.0 | 1.0 | 1.0 | 1.0 | 1.0 |
| PCC | 10.0 | 10.0 | 10.0 | 10.0 | 10.0 | 10.0 | 10.0 |
| GCC | 50.0 | 50.0 | 50.0 | 50.0 | 50.0 | 50.0 | 50.0 |
| Tyzor® IBAY | 1.0 | 1.0 | 1.0 | 1.0 | - | - | - |
| Tyzor® AA | - | - | - | - | 1.6 | 1.6 | 1.6 |
| Viskosität [Pa·s] | 39.1 | 89.7 | 54.0 | 48.8 | 62.0 | 60.5 | 60.6 |
| TFT [min] | 20 | 15 | 15 | 15 | 35 | 45 | 30 |
| Shore A | 40 | 22 | 34 | 38 | 35 | 35 | 35 |
| Zugfestigkeit [MPa] | 1.2 | 0.7 | 1.1 | 1.2 | 1.4 | 1.4 | 1.5 |
| Bruchdehnung [%] | 192 | 131 | 158 | 172 | 261 | 292 | 354 |
| E-Modul [MPa] | 1.4 | 0.4 | 0.9 | 1.0 | 1.5 | 1.5 | 1.6 |

**Tabelle 5: Zusammensetzung und Eigenschaften der Zusammensetzungen Z41 bis Z47.**

| **Zusammensetzung** | **Z41** | **Z42** | **Z43** | **Z44** | **Z45** | **Z46** | **Z47 (Ref.)** |
|---|---|---|---|---|---|---|---|
| Polymer | **M-3** 20.0 | **M-21** 20.0 | **M-22** 20.0 | **M-10** 15.0 | **M-10** 15.0 | **M-25** 20.0 | **R-3** 20.0 |
| | | | | **M-23** 5.0 | **M-24** 9.0 | | |
| DIDP | 17.6 | 17.6 | 17.6 | 17.6 | 17.6 | 17.6 | 17.6 |
| *Verdickerpaste* | 5.9 | 5.9 | 5.9 | 5.9 | 5.9 | 5.9 | 5.9 |
| VTEO | 1.0 | 1.0 | 1.0 | 1.0 | 1.0 | 1.0 | 1.0 |
| PCC | 10.0 | 10.0 | 10.0 | 10.0 | 10.0 | 10.0 | 10.0 |
| GCC | 50.0 | 50.0 | 50.0 | 50.0 | 50.0 | 50.0 | 50.0 |
| Tyzor® IBAY | 1.6 | 1.6 | 1.6 | - | - | 1.6 | 1.6 |
| Tyzor® AA | - | - | - | 2.0 | 2.0 | - | - |
| Viskosität [Pa·s] | 49.1 | 49.0 | 84.1 | 42.4 | 47.6 | 31.9 | 30.3 |
| TFT [min] | 80 | 110 | 150 | 130 | 140 | 125 | 180 |
| Shore A | 49 | 22 | 28 | 53 | 58 | 40 | 36 |
| Zugfestigkeit [MPa] | 1.5 | 1.2 | 1.2 | 1.3 | 1.6 | 1.2 | 1.0 |
| Bruchdehnung [%] | 139 | 128 | 170 | 125 | 139 | 115 | 122 |
| E-Modul [MPa] | 1.6 | 1.0 | 0.8 | 2.7 | 3.4 | 1.2 | 0.8 |

**Tabelle 6: Zusammensetzung und Eigenschaften der Zusammensetzungen Z48 bis Z53.**

| **Zusammensetzung** | **Z48** | **Z49** | **Z50 (Ref.)** | **Z51 (Ref.)** | **Z52** | **Z53** |
|---|---|---|---|---|---|---|
| Polymer | **M-26** 20.0 | **M-10** 10.0 | **R-4** 18.0 | **E-1** 18.0 | **M-27** 18.0 | **M-28** 18.0 |
| | | **M-26** 10.0 | | | | |
| DIDP | 17.6 | 17.6 | 19.6 | 19.6 | 19.6 | 19.6 |
| *Verdickerpaste* | 5.9 | 5.9 | 5.9 | 5.9 | 5.9 | 5.9 |
| VTEO | 1.0 | 1.0 | 1.0 | 1.0 | 1.0 | 1.0 |
| PCC | 10.0 | 10.0 | 10.0 | 10.0 | 10.0 | 10.0 |
| GCC | 50.0 | 50.0 | 50.0 | 50.0 | 50.0 | 50.0 |
| Tyzor® IBAY | 1.6 | 1.6 | 1.6 | 1.6 | 1.6 | 1.6 |
| Viskosität [Pa·s] | 118.0 | 48.4 | 55.9 | 76.0 | 59.1 | 76.3 |
| TFT [min] | 35 | 30 | >300 | 50 | 145 | 65 |
| Shore A | 66 | 61 | 20 | 37 | 36 | 37 |
| Zugfestigkeit [MPa] | 2.4 | 1.9 | 1.1 | 1.4 | 1.1 | 1.2 |
| Bruchdehnung [%] | 62 | 85 | 165 | 174 | 211 | 238 |
| E-Modul [MPa] | 5.3 | 3.0 | 0.9 | 1.5 | 0.8 | 1.0 |

**Tabelle 7: Zusammensetzung und Eigenschaften der Zusammensetzungen Z54 bis Z56.**

| **Zusammensetzung** | **Z54** | **Z55** | **Z56** |
|---|---|---|---|
| Polymer | **M-29** 18.0 | **M-29** 18.0 | **M-30** 18.0 |
| DIDP | 4.5 | 4.5 | 4.5 |
| VTEO | 1.5 | 1.5 | 1.5 |
| Tyzor® IBAY | 1.5 | - | 1.5 |
| pyrogene Kieselsäure | 0.5 | 0.5 | 0.5 |
| Geniosil® GF 94 | - | 1.5 | - |
| DBU | 0.4 | 0.4 | 0.4 |
| TFT [min] | 400 | 500 | 270 |
| Shore A | 41 | 51 | 10 |

## Patentansprüche

1. Polymer-Zubereitung bestehend aus silanfunktionellen Polymeren, umfassend mindestens ein Polymer mit mindestens einer Endgruppe der Formel (I), 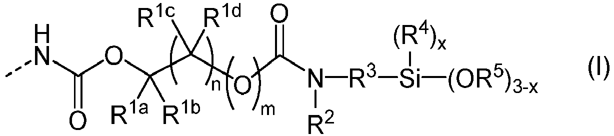 wobei
R^{1a}, R^{1b}, R^{1c} und R^{1d} unabhängig voneinander jeweils für ein Wasserstoffatom oder einen einwertigen Kohlenwasserstoffrest mit 1 bis 12 C-Atomen, oder paarweise jeweils für einen Alkylenrest mit 2 bis 6 C-Atomen stehen,
R² für ein Wasserstoffatom oder für einen einwertigen Kohlenwasserstoffrest mit 1 bis 12 C-Atomen, der gegebenenfalls Ethergruppen, Estergruppen, Nitrilgruppen, Aminogruppen oder Silangruppen enthält, steht,
R³ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, insbesondere Stickstoffatomen, steht,
R⁴ für einen Alkylrest mit 1 bis 8 C-Atomen steht,
R⁵ für einen Alkylrest mit 1 bis 10 C-Atomen, der gegebenenfalls Ethergruppen enthält, steht,
x für 0 oder 1 oder 2 steht,
m für 0 oder 1 steht, und
n für 0 oder 1 oder 2 oder 3 oder 4 oder 5 steht, wobei n für den Fall, dass m für 1 steht, für 1 oder 2 oder 3 oder 4 steht;
und mindestens einer weiteren Silan-Endgruppe, welche nicht der Formel (I) entspricht.

2. Polymer-Zubereitung gemäss Anspruch 1, **dadurch gekennzeichnet, dass** die silanfunktionellen Polymere Silangruppen-haltige Polyether und/oder Polyester und/oder Polycarbonate sind.

3. Polymer-Zubereitung gemäss einem der Ansprüche 1 bis 2, **dadurch gekennzeichnet, dass** die silanfunktionellen Polymere insgesamt ein mittleres Molekulargewicht im Bereich von 1'000 bis 30'000 g/mol aufweisen.

4. Polymer-Zubereitung gemäss einem der Ansprüche 1 bis 3, **dadurch gekennzeichnet, dass** m für 0, n für 0, R^{1a} für einen Methyl-Rest und R^{1b} für ein Wasserstoffatom stehen.

5. Polymer-Zubereitung gemäss einem der Ansprüche 1 bis 3, **dadurch gekennzeichnet, dass** m für 0, n für 2, R^{1a} für einen Methyl-Rest oder für einen n-Butyl-Rest, und R^{1b}, R^{1c} und R^{1d} jeweils für ein Wasserstoffatom stehen.

6. Polymer-Zubereitung gemäss einem der Ansprüche 1 bis 3, **dadurch gekennzeichnet, dass** m für 1, n für 1, R^{1a} für einen Methyl-Rest und R^{1b}, R^{1c} und R^{1d} jeweils für ein Wasserstoffatom stehen.

7. Polymer-Zubereitung gemäss einem der Ansprüche 1 bis 6, **dadurch gekennzeichnet, dass** die weitere Silan-Endgruppe eine Endgruppe der Formel (II) ist, 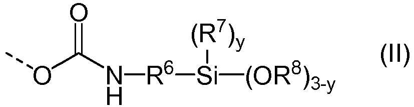 wobei
R⁶ für einen linearen oder verzweigten Alkylen- oder Cycloalkylenrest mit 1 bis 20 C-Atomen, gegebenenfalls mit aromatischen Anteilen, steht,
R⁷ für einen Alkylrest mit 1 bis 8 C-Atomen steht,
R⁸ für einen Alkylrest mit 1 bis 10 C-Atomen, der gegebenenfalls Ethergruppen enthält, steht, und
y für 0 oder 1 oder 2 steht.

8. Polymer-Zubereitung gemäss einem der Ansprüche 1 bis 6, **dadurch gekennzeichnet, dass** die weitere Silan-Endgruppe eine Endgruppe der Formel (III) ist, 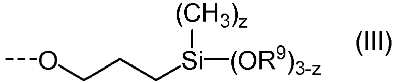 wobei
R⁹ für einen Methyl-Rest oder einen Ethyl-Rest steht und
z für 0 oder 1 oder 2 steht.

9. Polymer-Zubereitung gemäss einem der Ansprüche 1 bis 8, **dadurch gekennzeichnet, dass** die silanfunktionellen Polymere insgesamt ein Verhältnis zwischen der Anzahl Endgruppen der Formel (I) und der Anzahl weiterer Silan-Endgruppen im Bereich von 99/1 bis 5/95 aufweisen.

10. Verfahren zur Herstellung der Polymer-Zubereitung gemäss einem der Ansprüche 1 bis 9, umfassend die Schritte
- Bereitstellen eines Polymers enthaltend mindestens eine Hydroxylgruppe und mindestens eine Silan-Endgruppe, welche nicht der Formel (I) entspricht, als erstes Zwischenprodukt;
- Umsetzen des ersten Zwischenprodukts mit mindestens einem Diisocyanat bei einem NCO/OH-Verhältnis von über 1 zu einem zweiten Zwischenprodukt; und
- Umsetzen des zweiten Zwischenprodukts mit mindestens einem Hydroxysilan der Formel (VI) bei einem NCO/OH-Verhältnis von höchstens 1.

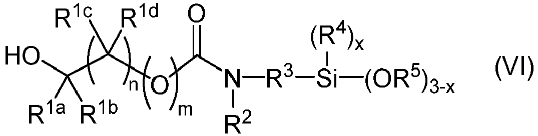

11. Verfahren gemäss Anspruch 10, **dadurch gekennzeichnet, dass** das erste Zwischenprodukt hergestellt wird durch Umsetzen
- mindestens eines Polyols mit mindestens einem Isocyanatosilan der Formel (IV) bei einem NCO/OH-Verhältnis von unter 1 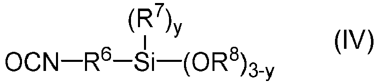 oder
- mindestens eines Allylgruppen aufweisenden Polyols mit mindestens einem Hydrosilan der Formel (V) unter Hydrosilylierung der Allylgruppen.

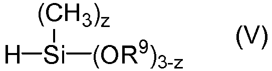

12. Zusammensetzung umfassend mindestens eine Polymer-Zubereitung gemäss einem der Ansprüche 1 bis 9.

13. Zusammensetzung gemäss Anspruch 12, **dadurch gekennzeichnet, dass** sie einen Gehalt an silanfunktionellen Polymeren im Bereich von 5 bis 95 Gewichts-% aufweist.

14. Verwendung einer Zusammensetzung gemäss einem der Ansprüche 12 bis 13 als elastischer Klebstoff oder Dichtstoff oder als elastische Beschichtung.

15. Methode zur Senkung der Viskosität eines Polymers mit mindestens einer Endgruppe der Formel (I) durch Einführen von mindestens einer weiteren Silan-Endgruppe, welche nicht der Formel (I) entspricht, 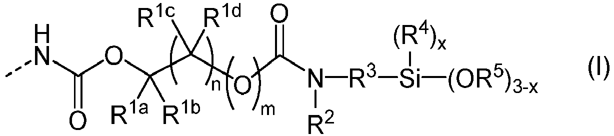 wobei
R^{1a}, R^{1b}, R^{1c} und R^{1d} unabhängig voneinander jeweils für ein Wasserstoffatom oder einen einwertigen Kohlenwasserstoffrest mit 1 bis 12 C-Atomen, oder paarweise jeweils für einen Alkylenrest mit 2 bis 6 C-Atomen stehen,
R² für ein Wasserstoffatom oder für einen einwertigen Kohlenwasserstoffrest mit 1 bis 12 C-Atomen, der gegebenenfalls Ethergruppen, Estergruppen, Nitrilgruppen, Aminogruppen oder Silangruppen enthält, steht,
R³ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, insbesondere Stickstoffatomen, steht,
R⁴ für einen Alkylrest mit 1 bis 8 C-Atomen steht,
R⁵ für einen Alkylrest mit 1 bis 10 C-Atomen, der gegebenenfalls Ethergruppen enthält, steht,
x für 0 oder 1 oder 2 steht,
m für 0 oder 1 steht, und
n für 0 oder 1 oder 2 oder 3 oder 4 oder 5 steht, wobei n für den Fall, dass m für 1 steht, für 1 oder 2 oder 3 oder 4 steht.

## Claims

1. Polymer formulation consisting of silane-functional polymers comprising at least one polymer having at least one end group of the formula (I) 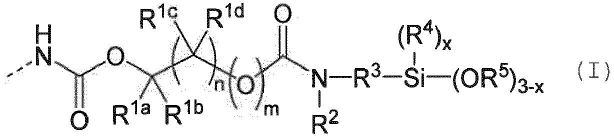 where
R^{1a}, R^{1b}, R^{1c} and R^{1d} are each independently a hydrogen atom or a monovalent hydrocarbyl radical having 1 to 12 carbon atoms, or in pairs are each an alkylene radical having 2 to 6 carbon atoms,
R² is a hydrogen atom or a monovalent hydrocarbyl radical which has 1 to 12 carbon atoms and optionally contains ether groups, ester groups, nitrile groups, amino groups or silane groups,
R³ is a linear or branched alkylene or cycloalkylene radical having 1 to 20 carbon atoms, optionally having aromatic components, and optionally having one or more heteroatoms, especially nitrogen atoms,
R⁴ is an alkyl radical having 1 to 8 carbon atoms,
R⁵ is an alkyl radical which has 1 to 10 carbon atoms and optionally contains ether groups,
x is 0 or 1 or 2,
m is 0 or 1, and
n is 0 or 1 or 2 or 3 or 4 or 5, where n, if m is 1, is 1 or 2 or 3 or 4;
and at least one further silane end group that does not correspond to the formula (I).

2. Polymer formulation according to Claim 1, **characterized in that** the silane-functional polymers are polyethers and/or polyesters and/or polycarbonates containing silane groups.

3. Polymer formulation according to either of Claims 1 and 2, **characterized in that** the silane-functional polymers overall have an average molecular weight in the range from 1'000 to 30'000 g/mol.

4. Polymer formulation according to any of Claims 1 to 3, **characterized in that** m is 0, n is 0, R^{1a} is a methyl radical and R^{1b} is a hydrogen atom.

5. Polymer formulation according to any of Claims 1 to 3, **characterized in that** m is 0, n is 2, R^{1a} is a methyl radical or is an n-butyl radical, and R^{1b}, R^{1c} and R^{1d} are each a hydrogen atom.

6. Polymer formulation according to any of Claims 1 to 3, **characterized in that** m is 1, n is 1, R^{1a} is a methyl radical, and R^{1b}, R^{1c} and R^{1d} are each a hydrogen atom.

7. Polymer formulation according to any of Claims 1 to 6, **characterized in that** the further silane end group is an end group of the formula (II) 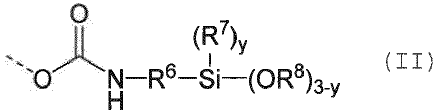 where
R⁶ is a linear or branched alkylene or cycloalkylene radical having 1 to 20 carbon atoms, optionally having aromatic components,
R⁷ is an alkyl radical having 1 to 8 carbon atoms,
R⁸ is an alkyl radical which has 1 to 10 carbon atoms and optionally contains ether groups, and
y is 0 or 1 or 2.

8. Polymer formulation according to any of Claims 1 to 6, **characterized in that** the further silane end group is an end group of the formula (III) 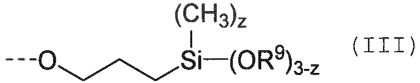 where
R⁹ is a methyl radical or an ethyl radical and
z is 0 or 1 or 2.

9. Polymer formulation according to any of Claims 1 to 8, **characterized in that** the silane-functional polymers overall have a ratio between the number of end groups of the formula (I) and the number of further silane end groups in the range from 99/1 to 5/95.

10. Process for producing the polymer formulation according to any of Claims 1 to 9, comprising the steps of
- providing a polymer containing at least one hydroxyl group and at least one silane end group which does not correspond to the formula (I) as first intermediate;
- reacting the first intermediate with at least one diisocyanate at an NCO/OH ratio of more than 1 to give a second intermediate; and
- reacting the second intermediate with at least one hydroxysilane of the formula (VI) at an NCO/OH ratio of not more than 1.

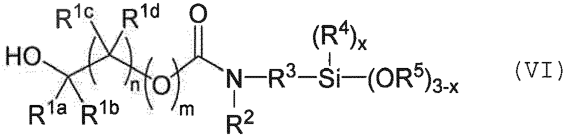

11. Process according to Claim 10, **characterized in that** the first intermediate is prepared by reacting
- at least one polyol with at least one isocyanatosilane of the formula (IV) at an NCO/OH ratio of less than 1 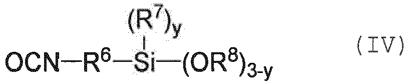 or
- at least one polyol having allyl groups with at least one hydrosilane of the formula (V) with hydrosilylation of the allyl groups.

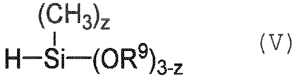

12. Composition comprising at least one polymer formulation according to any of Claims 1 to 9.

13. Composition according to Claim 12, **characterized in that** it has a content of silane-functional polymers in the range from 5% to 95% by weight.

14. Use of a composition according to either of Claims 12 and 13 as an elastic adhesive or sealant or as an elastic coating.

15. Method of lowering the viscosity of a polymer having at least one end group of the formula (I) by introducing at least one further silane end group that does not correspond to the formula (I) 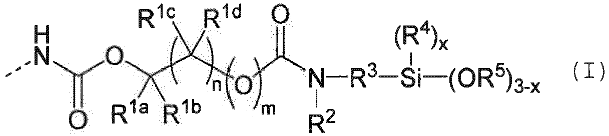 where
R^{1a}, R^{1b}, R^{1c} and R^{1d} are each independently a hydrogen atom or a monovalent hydrocarbyl radical having 1 to 12 carbon atoms, or in pairs are each an alkylene radical having 2 to 6 carbon atoms,
R² is a hydrogen atom or a monovalent hydrocarbyl radical which has 1 to 12 carbon atoms and optionally contains ether groups, ester groups, nitrile groups, amino groups or silane groups,
R³ is a linear or branched alkylene or cycloalkylene radical having 1 to 20 carbon atoms, optionally having aromatic components, and optionally having one or more heteroatoms, especially nitrogen atoms,
R⁴ is an alkyl radical having 1 to 8 carbon atoms,
R⁵ is an alkyl radical which has 1 to 10 carbon atoms and optionally contains ether groups,
x is 0 or 1 or 2,
m is 0 or 1, and
n is 0 or 1 or 2 or 3 or 4 or 5, where n, if m is 1, is 1 or 2 or 3 or 4.

## Revendications

1. Préparation polymère constituée par des polymères à fonctionnalité silane, comprenant au moins un polymère présentant au moins un groupe terminal de formule (I), 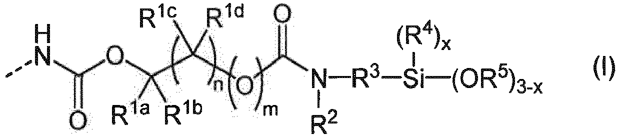 dans laquelle
R^{1a}, R^{1b}, R^{1c} et R^{1d} représentent, indépendamment les uns des autres, à chaque fois un atome d'hydrogène ou un radical hydrocarboné monovalent comprenant 1 à 12 atomes de carbone ou, par paires, à chaque fois un radical alkylène comprenant 2 à 6 atomes de carbone,
R² représente un atome d'hydrogène ou un radical hydrocarboné monovalent comprenant 1 à 12 atomes de carbone, qui contient le cas échéant des groupes éther, des groupes ester, des groupes nitrile, des groupes amino ou des groupes silane,
R³ représente un radical alkylène linéaire ou ramifié ou un radical cycloalkylène comprenant 1 à 20 atomes de carbone, le cas échéant avec des proportions aromatiques et le cas échéant avec un ou plusieurs hétéroatomes, en particulier des atomes d'azote,
R⁴ représente un radical alkyle comprenant 1 à 8 atomes de carbone,
R⁵ représente un radical alkyle comprenant 1 à 10 atomes de carbone, qui contient le cas échéant des groupes éther,
x représente 0 ou 1 ou 2,
m représente 0 ou 1 et
n représente 0 ou 1 ou 2 ou 3 ou 4 ou 5, n représentant 1 ou 2 ou 3 ou 4 dans le cas où m représente 1 ;
et au moins un autre groupe terminal de type silane qui ne correspond pas à la formule (I).

2. Préparation polymère selon la revendication 1, **caractérisée en ce que** les polymères à fonctionnalité silane sont des polyéthers et/ou des polyesters et/ou des polycarbonates contenant des groupes silane.

3. Préparation polymère selon l'une quelconque des revendications 1 à 2, **caractérisée en ce que** les polymères à fonctionnalité silane présentent au total un poids moléculaire moyen dans la plage de 1000 à 30.000 g/mole.

4. Préparation polymère selon l'une quelconque des revendications 1 à 3, **caractérisée en ce que** m représente 0, n représente 0, R^{1a} représente un radical méthyle et R^{1b} représente un atome d'hydrogène.

5. Préparation polymère selon l'une quelconque des revendications 1 à 3, **caractérisée en ce que** m représente 0, n représente 2, R^{1a} représente un radical méthyle ou un radical n-butyle et R^{1b}, R^{1c} et R^{1d} représentent chacun un atome d'hydrogène.

6. Préparation polymère selon l'une quelconque des revendications 1 à 3, **caractérisée en ce que** m représente 1, n représente 1, R^{1a} représente un radical méthyle et R^{1b}, R^{1c} et R^{1d} représentent chacun un atome d'hydrogène.

7. Préparation polymère selon l'une quelconque des revendications 1 à 6, **caractérisée en ce que** l'autre groupe terminal de type silane est un groupe terminal de formule (II) 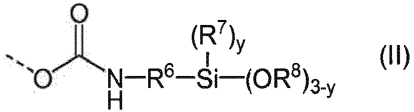 dans laquelle
R⁶ représente un radical alkylène linéaire ou ramifié ou un radical cycloalkylène comprenant 1 à 20 atomes de carbone, le cas échéant avec des proportions aromatiques,
R⁷ représente un radical alkyle comprenant 1 à 8 atomes de carbone,
R⁸ représente un radical alkyle comprenant 1 à 10 atomes de carbone, qui contient le cas échéant des groupes éther et
y représente 0 ou 1 ou 2.

8. Préparation polymère selon l'une quelconque des revendications 1 à 6, **caractérisée en ce que** l'autre groupe terminal de type silane est un groupe terminal de formule (III) 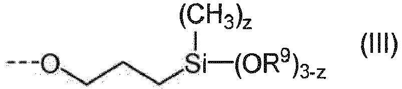 dans laquelle
R⁹ représente un radical méthyle ou un radical éthyle et
z représente 0 ou 1 ou 2.

9. Préparation polymère selon l'une quelconque des revendications 1 à 8, **caractérisée en ce que** les polymères à fonctionnalité silane présentent au total un rapport entre le nombre de groupes terminaux de formule (I) et le nombre d'autres groupes terminaux de type silane dans la plage de 99/1 à 5/95.

10. Procédé pour la préparation de la préparation polymère selon l'une quelconque des revendications 1 à 9, comprenant les étapes
- préparation d'un polymère contenant au moins un groupe hydroxyle et au moins un groupe terminal de type silane qui ne correspond pas à la formule (I) comme premier produit intermédiaire ;
- transformation du premier produit intermédiaire avec au moins un diisocyanate à un rapport NCO/OH supérieur à 1 en un deuxième produit intermédiaire ; et
- transformation du deuxième produit intermédiaire avec au moins un hydroxysilane de formule (VI) à un rapport NCO/OH d'au plus 1.

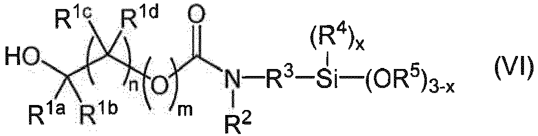

11. Procédé selon la revendication 10, **caractérisé en ce que** le premier produit intermédiaire est préparé par transformation de
- au moins un polyol avec au moins un isocyanatosilane de formule (IV) à un rapport NCO/OH inférieur à 1 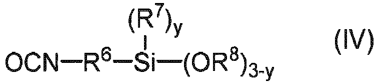 ou
- au moins un polyol présentant des groupes allyle avec au moins un hydrosilane de formule (V) avec hydrosilylation des groupes allyle.

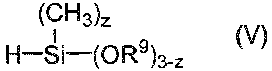

12. Composition comprenant au moins une préparation polymère selon l'une quelconque des revendications 1 à 9.

13. Composition selon la revendication 12, **caractérisée en ce qu'**elle présente une teneur en polymères à fonctionnalité silane dans la plage de 5 à 95% en poids.

14. Utilisation d'une composition selon l'une quelconque des revendications 12 à 13 comme adhésif élastique ou masse d'étanchéité élastique ou comme revêtement élastique.

15. Procédé pour abaisser la viscosité d'un polymère présentant au moins un groupe terminal de formule (I) par introduction d'au moins un autre groupe terminal de type silane qui ne correspond pas à la formule (I), 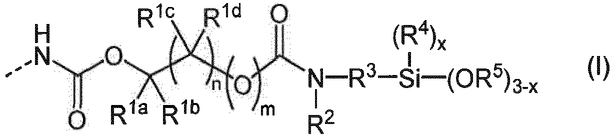 dans laquelle
R^{1a}, R^{1b}, R^{1c} et R^{1d} représentent, indépendamment les uns des autres, à chaque fois un atome d'hydrogène ou un radical hydrocarboné monovalent comprenant 1 à 12 atomes de carbone ou, par paires, à chaque fois un radical alkylène comprenant 2 à 6 atomes de carbone,
R² représente un atome d'hydrogène ou un radical hydrocarboné monovalent comprenant 1 à 12 atomes de carbone, qui contient le cas échéant des groupes éther, des groupes ester, des groupes nitrile, des groupes amino ou des groupes silane,
R³ représente un radical alkylène linéaire ou ramifié ou un radical cycloalkylène comprenant 1 à 20 atomes de carbone, le cas échéant avec des proportions aromatiques et le cas échéant avec un ou plusieurs hétéroatomes, en particulier des atomes d'azote,
R⁴ représente un radical alkyle comprenant 1 à 8 atomes de carbone,
R⁵ représente un radical alkyle comprenant 1 à 10 atomes de carbone, qui contient le cas échéant des groupes éther,
x représente 0 ou 1 ou 2,
m représente 0 ou 1 et
n représente 0 ou 1 ou 2 ou 3 ou 4 ou 5, n représentant 1 ou 2 ou 3 ou 4 dans le cas où m représente 1.
